# EUROPEAN PATENT APPLICATION

(11) **EP 2 595 123 A2**
(43) Date of publication of application: **22.05.2013**
(21) Application number: 12192782.6
(22) Date of filing: 15.11.2012
(51) Int. Cl.: G07F 17/32

(54) **Showing mobile device display on a electronic gaming machine**

(30) Priority: 17.11.2011 US 201113299199
(71) Applicant: IGT, Reno, Nevada 89521-8986 (US)
(72) Inventor: LeMay, Steven G., Reno, NV Nevada 89511 (US); Nelson, Dwayne R., Las Vegas, NV Nevada 89113 (US)
(74) Representative: Cerbaro, Elena

(57) **Abstract**

A gaming system compatible with patron-controlled mobile devices, such as smart phones or tablet computers, is described. The gaming system can be configured to allow a copy of a current mobile device's screen display to be output to a display on a wager-based electronic gaming machine. A person at the EGM can use the copy of the mobile device's screen display on the EGM to determine that their phone is currently paired with the EGM. In one embodiment, the mobile device can be remotely controlled from the EGM. For instance, touch screen inputs received at the EGM can be used to affect a state of the mobile device.

## Description

### BACKGROUND

### Field of the Described Embodiments

The described embodiments relate generally to gaming systems, such as gaming systems deployed in a casino enterprise. More particularly, apparatus and method for using a mobile device in an electronic gaming machine are described.

### Description of the Related Art

Developing and maintaining a loyal customer base is a critical component of operating a successful casino enterprise. To develop a loyal customer base, casino enterprises attempt to generate interactions with their patrons that provide a unique and personalized game playing experience. As an example, casino enterprises offer patrons the opportunity to participate in a loyalty program. Via the loyalty program, patrons are offered various promotions and free items that encourage the patron to return to the casino.

In the loyalty program, the promotions can be tailored to the patron's preferences. As an example, if preferred, a patron can choose to receive promotional credits for game play on an electronic gaming machine and information regarding this preference can be stored to an account associated with the loyalty program. In general, information regarding the patron's preferences in regards to promotions as well as other activities within the casino enterprise, such as food, drink and room preferences, can be stored to their account associated with the loyalty program. The patron information stored in the account can be used to personalize the service and the game playing experience provided by the casino enterprise.

An ever increasing portion of patrons that visit casinos are regularly carrying mobile devices, such as smart phones, laptops, netbooks and tablet computers, on their person. The mobile devices provide 1) a means of communication allowing the patron to communicate with other individuals within or outside of a casino via a number of different communication modes, 2) a source of news and information, 3) a portal to the patron's on-line activities, such as social media applications, 4) support for entertainment features, such as audio/video playback and gaming applications, 5) a repository for personal information, such as financial information that enables financial transactions in a mobile wallet applications and 6) a means of capturing information, such as video images and audio recordings. Thus, mobile devices, such as smart phones, are becoming essential tools and in some instances, the primary electronic interface for many individuals.

The popularity of mobile devices allows for the possibility of utilizing their capabilities to further personalize and enhance the gaming experience in a casino gaming environment. In view of the above, methods and apparatus are desired that allow for complementary interactions with a mobile devices within a casino environment, such as when a patron is participating in game play on an electronic gaming machine.

### SUMMARY OF THE DESCRIBED EMBODIMENTS

A gaming system compatible with patron-controlled mobile devices, such as smart phones, netbooks, laptops, tablet computers, smart cards and memory sticks, is described. The gaming system can include gaming devices, such as electronic gaming machines and system servers. The electronic gaming machines (EGMs) can be configured accept cash or an indicia of credit that can be used to make wagers on the wager-based games. The EGMs can be deployed in a casino environment.

In one embodiment, the EGM can be configured to 1) wirelessly pair with a mobile device or 2) provide an interface, such as connector, that allows the mobile device to be coupled to the EGM via a wired connection. In another embodiment, communication between the EGM and the mobile device can be enabled via an intermediary device. For instance, via a wireless access point, communications can be established between a system server and a mobile device. Then, a communication link between the EGM and the system server can be established that allows information to be communicated between the EGM and the mobile device.

In one embodiment, an EGM can be configured to receive and display a representation of content output to the display of a mobile device. For example, a screen shot of the display of the mobile device can be output to a main display or a secondary display on the EGM. The screen shot can be periodically updated to reflect changes on the display of the mobile device. In another example, the mobile device can be configured to stream a copy of images output to its display to the EGM. The streamed images can be output to the main display or a secondary display on the gaming machine.

In particular embodiments, the mobile device can be remotely controlled from the EGM. For instance, a mobile device screen display can include an icon of application available on the mobile device. A copy of the mobile device screen display can also be output to a display, such as a touch screen display, on the EGM. Via the touch screen display or some other method, such as via a button panel on the EGM, the icon can be selected at the EGM. Then, data indicating the selection of the icon can be sent from the EGM to the mobile device. In response to receiving the data, the mobile device can launch the application. The launch of the application can change the configuration of the content displayed on the mobile device screen display. Subsequently, the copy of the mobile device screen display output on the EGM can be updated to reflect the changes resulting from the launch of the application.

The image associated with the mobile device displayed on the EGM can be used to indicate that the mobile device and information received from the mobile device is currently associated with the EGM. For example, when player tracking information is received from a mobile device that is used to instantiate a player tracking session on the EGM, a copy of image data from the mobile device that provided the player tracking information, such as a current screen state of the mobile device, can also be displayed to the EGM. Thus, by comparing the screen contents on their mobile device with the copy displayed on the EGM the user can confirm that the EGM is properly paired with the user's mobile device and not some other nearby mobile device. Additional confirmation can be provided when input is received at the EGM, such as a selection of an application on the mobile phone, is transmitted to the mobile device and is used to change a state of the mobile device, such as the mobile device screen display. When a user doesn't have a mobile device or their mobile device is turned off and a mobile device screen image appears on the EGM display, the user can determine that the EGM is improperly coupled to a mobile device. The EGM can provide a mechanism that allows a user to terminate a coupling between the EGM and the mobile device.

One aspect of the embodiments described herein is related to a method on a wager-based electronic gaming machine (EGM) including a processor and a memory. The method can be generally characterized as including: 1) establishing communications with a mobile device; 2) receiving a copy of a mobile device screen display from the mobile device; and 3) displaying the copy of the mobile device screen display to a display on the EGM where the copy of the mobile device screen display is used to indicate that a mobile device with the mobile device screen display is in an active communication session with the EGM.

Another aspects of the embodiments described herein is related to a method in server including a processor and a memory configured to communicate with a plurality of wager-based electronic gaming machines (EGMs). The method can be generally characterized as including: 1) establishing communications with a mobile device; 2) determining the mobile device is in the vicinity of a first EGM; 3) establishing communications between the mobile device and the first EGM; 4) receiving a copy of a mobile device screen display from the mobile device; and 5) sending the copy of the mobile device screen display to the first EGM for output to a display on the first EGM wherein the copy of the mobile device screen display is used to indicate that the mobile device with the mobile device screen display is in an active communication session with the first EGM.

### BRIEF DESCRIPTION OF THE DRAWINGS

The embodiments will be readily understood by the following detailed description in conjunction with the accompanying drawings, wherein like reference numerals designate like structural elements, and in which:

Fig. 1 is a perspective drawing of a gaming system, including a wager-based gaming machine and a system server where the system server and/or wager-based gaming machine are configured to communicate with patron controlled mobile devices in accordance with the described embodiments.

Figs. 2A and 2B are block diagrams illustrating communication pathways in a system server and a gaming machine involving mobile device communications in accordance with the described embodiments.

Figs. 3A-3E are block diagrams illustrating a copy of mobile device screen display on a main display or a secondary display of an EGM in accordance with the described embodiments.

Fig. 4A-4D are block diagrams illustrating mobile device screen displays output to a display on an EGM where mobile device is controlled from the EGM in accordance with the described embodiments.

Fig. 5A is a method in a gaming machine for displaying a mobile device screen display in accordance with the described embodiments.

Fig. 5B is a method in a server involving displaying a copy of a mobile device screen display on an EGM display in accordance with the preferred embodiments.

Fig. 6 shows a block diagram of a gaming device in accordance with the described embodiments.

Fig. 7 shows a perspective drawing of a gaming device in accordance with the described embodiments.

### DESCRIBED EMBODIMENTS

In the following paper, numerous specific details are set forth to provide a thorough understanding of the concepts underlying the described embodiments. It will be apparent, however, to one skilled in the art that the described embodiments may be practiced without some or all of these specific details. In other instances, well known process steps have not been described in detail in order to avoid unnecessarily obscuring the underlying concepts.

A gaming system compatible with mobile devices controlled by users of the gaming system is described. In one embodiment, the mobile devices can be configured to transmit and receive information used on a wager-based EGM. For instance, the mobile devices can store and transmit virtual ticket voucher information to an EGM that is used to deposit or remove credits from an EGM as part of cashless system. As another example, the mobile devices can be used to transmit player tracking information, such as a loyalty program account number, that initiates a player tracking session on the EGM. In yet another example, the patron controlled mobile devices can be configured to execute applications which generate information that can affect a state of an EGM and to receive information from an EGM and/or a system server that affect a state of the mobile device.

In particular embodiments, a copy of a mobile device screen display currently or recently visible on the mobile device can be simultaneously output to a display device on an EGM. The EGM and mobile device can be configured to allow the mobile device to be controlled from the EGM. For instance, via the EGM, it may be possible to launch an application, affect an application currently executing on the mobile device or change a state of the mobile device, such as causing the mobile device to emit a sound or perform some other action. The copy of the mobile device screen display output to the EGM can be periodically update to reflect changes to the screen display that have occurred on the mobile device. The interaction between the mobile device and the EGM including displaying a copy of the mobile screen display on the EGM can allow a user at the EGM to determine that their mobile device and not some other user's mobile device is currently paired with the EGM.

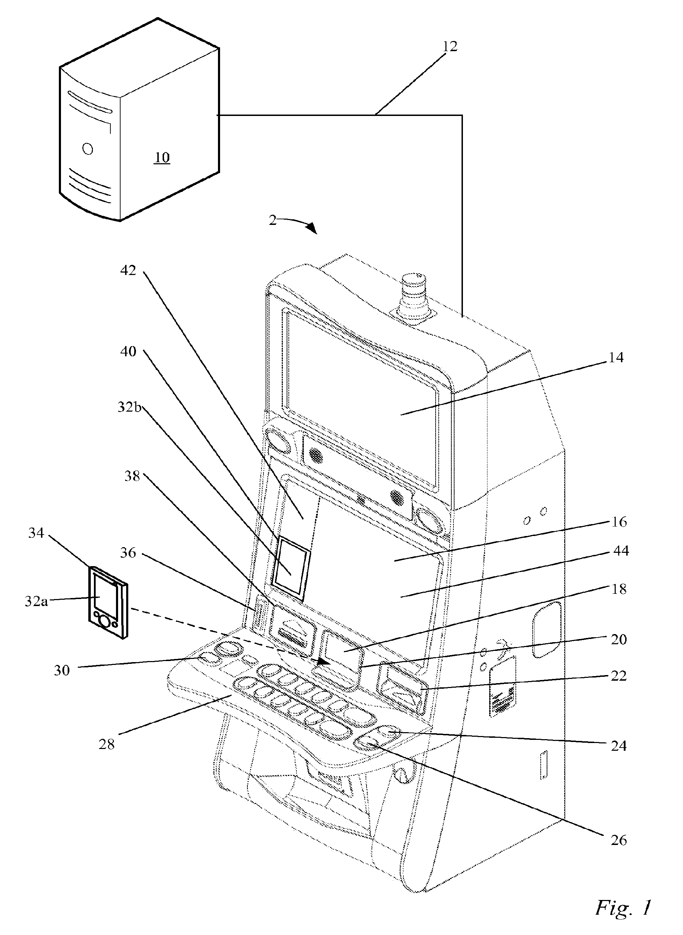

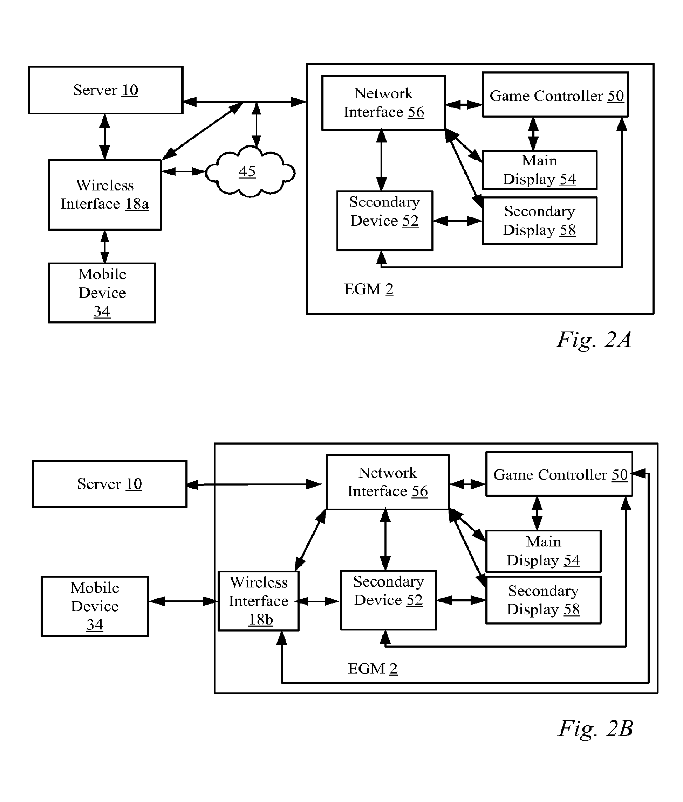

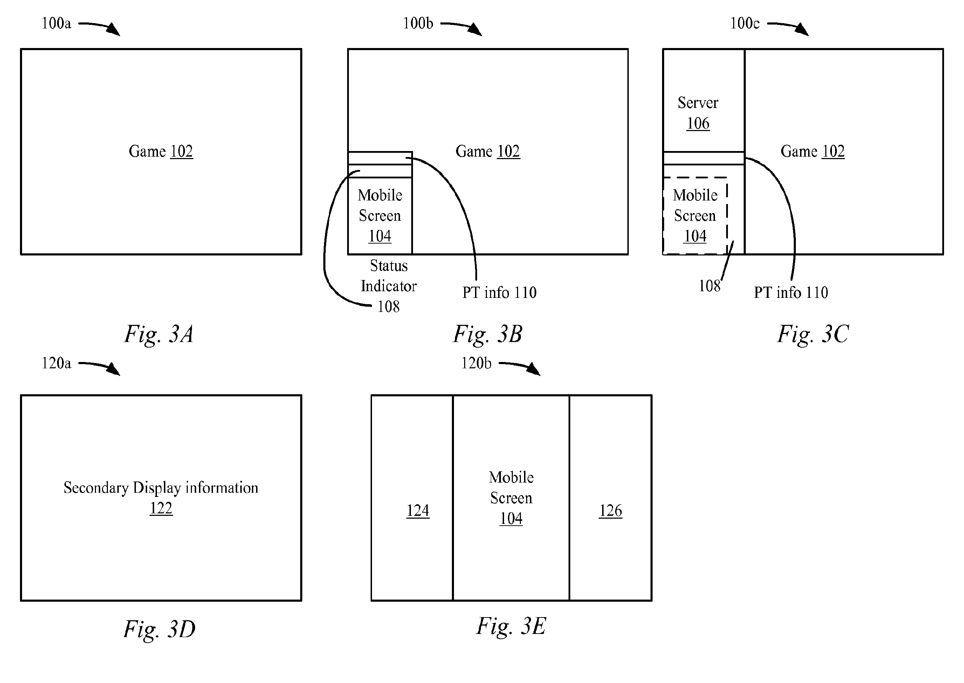

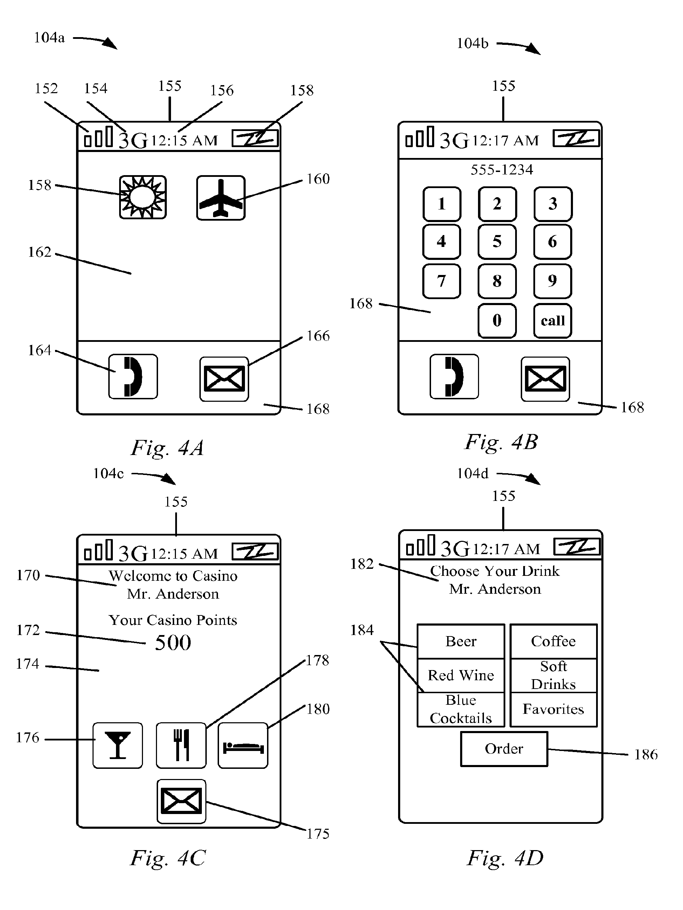

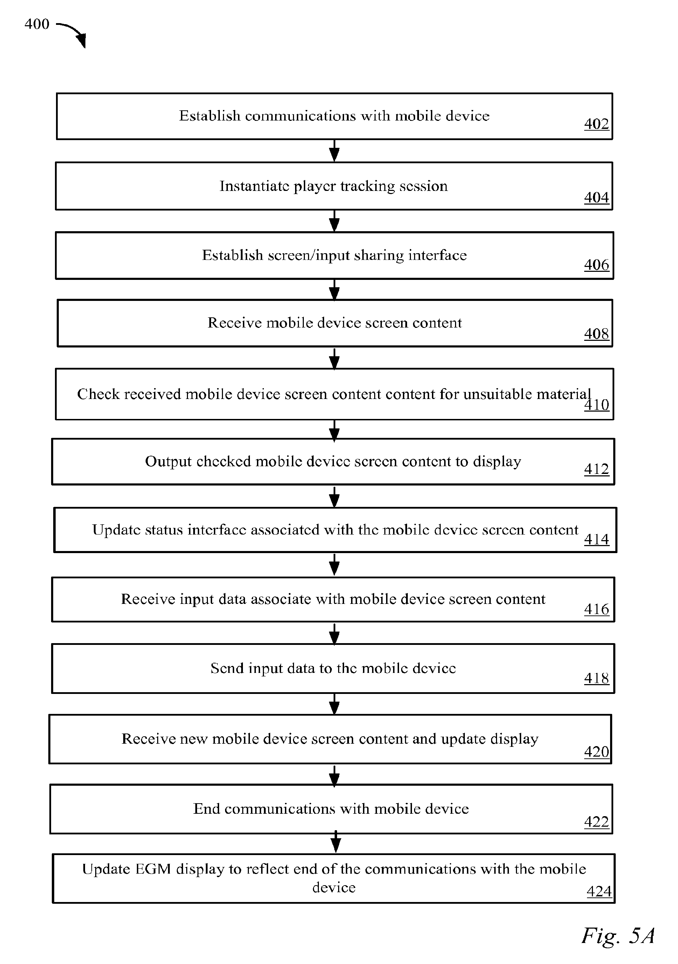

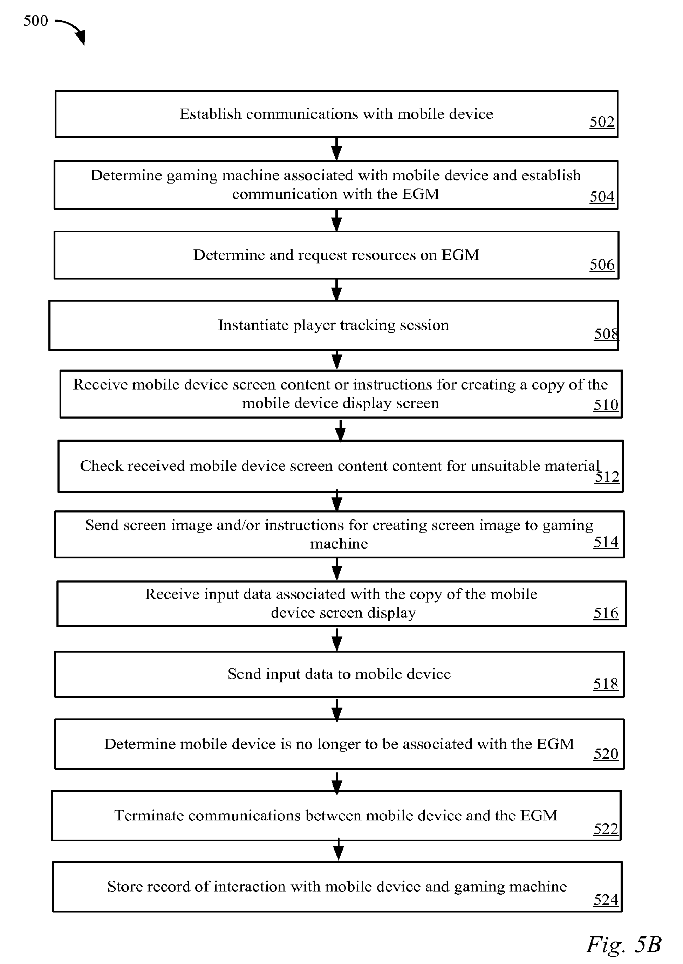

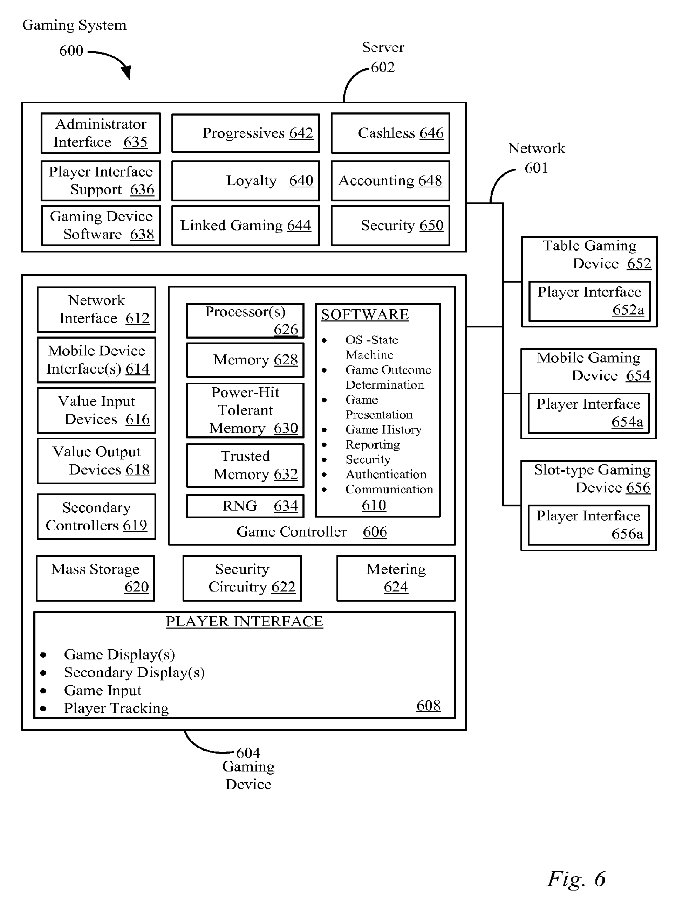

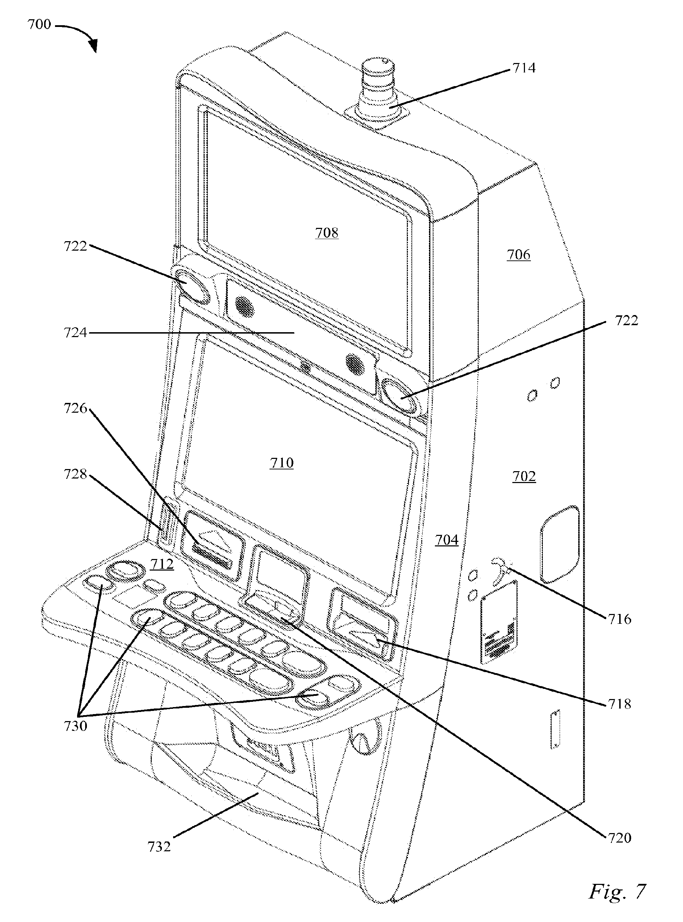

With respect to the following figures, methods and apparatus that allow a mobile device to interact with an EGM including displaying a copy of a mobile device's screen display to an EGM and/or remote controlling the mobile device from the EGM are described. In particular, with respect to Fig. 1, interactions between a mobile device and an EGM and/or system server where a copy of mobile device screen display is displayed on the EGM are described. With respect to Figs. 2A and 2B, different instantiations of communication pathways that allow communications between a mobile device and an EGM are described. Examples of outputting a copy of the mobile device to a main display or a secondary display on the EGM are discussed with respect to Figs. 3A to 3B. In Figs. 4A through 4B, details of the copy of the mobile device screen display rendered on the EGM are discussed. A method in the EGM related to rendering a copy of a mobile device screen display on an EGM display is discussed with respect to Figs. 5A. In Fig. 5B, a method in a server related to rendering a copy of a mobile device screen display on the EGM display is described. Additional details of a gaming system and associated gaming devices that can render a copy of a mobile device screen display to an EGM display are discussed with respect to Figs. 6 and 7.

### EGM-Mobile Device Interactions in a Gaming System

Fig. 1 is a perspective drawing of a gaming system that allows for interactions between a mobile device 34 and an EGM 2. With respect to this figure, higher level details related to displaying a copy of a mobile device screen display on an EGM and some of its uses in a wager-based gaming context are described. In Fig. 1, a gaming system server 10 is shown connected to an electronic gaming machine (EGM) 2. The connection 12 between server 10 and EGM 2 can be via wireless and/or wired communication links. In a casino environment, the EGM 2 can be connected to multiple servers and the gaming system server 10 can be connected to multiple EGMs. Further, different EGMs can be connected to different combinations of servers. Thus, this example is provided for the purposes of illustration only.

The EGM 2 is configured to communicate with the mobile device 34. In some instances, the EGM 2 can communicate directly with the mobile device via a wired or wireless communication interface located on the EGM 2. Also, the EGM 2 can be communication with a mobile device via multiple communication channels simultaneously, such as via two different wireless communication channels (e.g., Wi-Fi or Bluetooth™).

In other embodiments, a portion of the communications between the EGM 2 and the mobile device can be through an intermediary device, such as server 10. For instance, a communication channel can be first initiated between the server 10 and the mobile device 34. Then, in instances where it is determined the mobile device 34 is near a particular EGM, such as 2, the server 10 can open up a communication channel between the server and the EGM determined to be near the mobile device. Then, the server 10 can act as intermediary device where communications between the mobile device 34 and the EGM 2 are routed through the server 10.

The location of the mobile device 34 can be determined by the server 10, the EGM 2 or the mobile device 34, alone or in combination with one another. For instance, the mobile device 34 can gather information that is transmitted to the sever 10 and/or the EGM 2 that allows the mobile device 34 location to be determined. In another example, the EGM 2 can include a detection mechanism, such as a Near-field communication (NFC) interface that allows the presence of a mobile device, such as 34, at the EGM 2 to be detected.

The mobile device 34 can be configured to initiate and maintain multiple simultaneous communication channels with different devices in the gaming system. For instance, a first direct communication channel between the mobile device 34 and the EGM 2 can be established for some types of information that are communicated between the devices. Whereas, a second communication channel can be opened between the mobile device 34 and the EGM 2 for communicating other types of information where the communications are routed through system server 10. For example, credit information that allows credits to be deposited on the EGM 2 may be routed through server 10 via first communication channel using a first communication protocol. However, information that allows a copy of the mobile device screen display 32a to be displayed on the EGM 2 can be transferred via direct communications between the devices via a second communication channel and a second protocol. In some instances, the first and second communication protocol can be the same communication protocol. In general, the mobile device 34, the EGM 2 and/or the server 10 can maintain multiple simultaneous communication channels for communicating different types of information between the mobile device 34 and the EGM 2 where one or more different communication protocol are used.

In one embodiment, the server 10 can act as a gateway for communications between the mobile device 34 and different EGMs. For instance, the communication session between the mobile device 34 and the server 10 can be maintained as the mobile device is moved from EGM to EGM in an environment with multiple EGMs, such as a casino. However, the server 10 can be configured to terminate a communication session between the mobile device 34 and a first EGM when the mobile device 34 is moved from the vicinity of the first EGM and instantiate a communication session between the mobile device and a new EGM when the mobile device is moved to the vicinity of the new EGM. The server 10 can repeat this process as the mobile device 34 is moved from device to device by the user.

Once a communication session is established between the mobile device 34 and the EGM 2, the mobile device 34 and EGM 2 can begin interacting. The interactions can be in the context of a wager-based gaming environment and can depend on the respective capabilities of the mobile device 34 and the EGM 2. Thus, as follows, the EGM 2 and its capabilities are briefly described and then interactions involving a mobile device 34, the EGM 2 and/or server 10 are discussed. In particular, examples of interactions between the EGM 2 and the mobile device 34 are described where a copy 32b of a display screen 32a on the mobile device 34 is also displayed on the EGM 2.

A copy of the mobile device screen display 32b can attempt to duplicate an image output to the mobile device. For instance, a copy of the frame buffer on the mobile device 34 can be sent to the EGM 2 for output. In other embodiments, the copy 32b can be an identifiable representation of an image 32a output to the mobile device screen display which provides enough details to be recognizable as being received from the mobile device 34 but may not reproduce all the details of the mobile device screen display in their entirety. For instance, the icons and their position on the mobile device screen display can be rendered in the copy output to an EGM display. However, the background behind the icons, such as an image selected by the user of the mobile device may not be rendered. In another example, the resolution, size or aspect ratio of the copy 32b can be different from the resolution, ratio or size of an image 32a displayed on the mobile device. For instance, the copy 32b can be rendered like an icon on the EGM display with a much scaled down detail of the copy 32b shown in the icon.

Returning to Fig. 1, the EGM 2 can include multiple displays, such as displays 14 and 16. The displays can be used to output video images associated with a wager-based game play, such as a presentation associated with a main game or a bonus game. Each of the displays on the EGM 2, such as 14 and 16, can be configured to receive content from one or more of a game controller within the EGM 2 (see Fig. 6), a remote device, such as server 10, a mobile device 34 or combinations thereof.

As an example of receiving content from a remote device, content for a rectangular portion 42 of display 16 can be controlled by the remote server 10. The remote server 10 can be configured to receive a copy of the mobile device screen display from mobile device 34. Then, the server can be configured to send this content to EGM 2 for display in portion 40 of display 16 under its control. Other content can be displayed in portion 42. For instance, additional content can be displayed above the copy of the mobile device screen display 32b. In some embodiments, the EGM 2 can be configured to allocate resources to a remote device, such as but not limited to a portion 42 of display 16, a portion of memory and computational resources. This embodiment can be referred to as a "service window" and is described in more detail with respect to Fig. 6.

In addition, a secondary device coupled to the EGM 2, such as a player tracking unit, can include a secondary display. The secondary display can be used to output content generated on the player tracking unit by a player tracking controller or content received from another device, such as a game controller on the EGM 2, the server 10 or mobile device 34. Thus in some embodiments, a copy of a mobile device display can be rendered on a secondary display associated with a player tracking unit.

Game play decisions can be entered via a player input panel 28. The player input panel 28 can include mechanical buttons. One or more of the mechanical buttons can include a display screen that allows at least information about a function of a button to be displayed and changed over time. The player input panel 28 can also include a touch screen display that allows a selection of displayed buttons to be selected. In addition, displays 14 and/or 16 can be provided with a touch screen interface and an associated touch screen controller. The touch screen interfaces can be used to enter information about decisions associated with game play as well as information associated with other functions offered on a gaming machine.

In one embodiment, a touch screen interface can be used to receive selections used to remotely control the mobile device 34. For example, the copy of the mobile device screen display 32b can display icons associated with applications that can be executed on the mobile device. As shown, the copy 32b can be output to display 16. Via a touch screen interface on display 16, a touch input can be received at the location of the icon on display 16. The touch input can be processed and information can be communicated to the mobile device 34 such that the application on the mobile device 34 is launched in response to the touch input received via the touch screen on display 16.

The processing of the touch input can include mapping the touch screen data from a coordinate system associated with the EGM display to a coordinate system associated with the mobile device. If the size, aspect ratio, resolution and/or positioning of the copy of the mobile device screen display displayed on the EGM display is different than the size, aspect ratio, resolution and/or positioning of the copy of the image when it is output to the mobile device screen display, then the mapping can involving interpolating the touch screen data received at the EGM to account for differences in size, resolution and/or aspect ratio. In particular embodiments, the interpolation can occur on the EGM prior to sending it to the mobile device or the interpolation can occur after it is received at the mobile device. The interpolation of the touch screen data can require information about the size, resolution, aspect ratio and/or positioning of the image output to the mobile device screen display and the copy output to the EGM display.

The mapping of the copy of the mobile device display screen can involve scaling the image to allow it to fit in the display area on the EGM 2 that is different from it native resolution. The images output to an EGM display can be rendered from a 3-D gaming environment. In one embodiment, the copy of the mobile device display screen can be drawn on a surface in the 3-D gaming environment, scaled as desired in the 3-D environment and then rendered as a 2-D image output to the EGM display screen.

The input panel 28 or another input device on the EGM 2 can also be used to provide an input that affects a state of the mobile device 34. For instance, an actuation of one of the input buttons can cause a state change on the mobile device. For instance, an actuation of the button can cause the mobile device 34 to emit a sound. In another example, one of the input buttons can be mapped to a home button on the mobile device 34, such that when the input button is selected a command is sent to the mobile device to return it to a home state. In yet another example, an input button can be mapped to a particular application on the mobile device such that when an actuation of the input button is detected on the EGM, information is sent to the mobile device that causes the application to be launched on the mobile device. If the input button includes display capabilities then an image of the icon for the application displayed on the mobile device can also be displayed on the input button.

The EGM 2 can include a number of devices used in cash handling transactions. The cash handling devices can include 1) a bill acceptor 22 configured to accept cash and/or ticket vouchers, a printer 38 configured to generate printed ticket vouchers and 3) a card reader 36 which can be configured to read a magnetic striped card or a smart card. The magnetic striped card or the smart card can be used to store account information used to transfer funds, such as funds stored on a debit card. In another example, the magnetic striped card or smart card can store information associated with a loyalty program account and the card reader 36 can be used to read account information associated with a loyalty program account from the card.

In a particular embodiment, a wireless interface 18 can be configured to receive information, such as information associated with the image 32a, from a mobile device 34. As an example, the wireless interface 18 can be configured to implement a near field communication (NFC) protocol. The NFC protocol is designed with a communication range of 4 cm or less. NFC operates at 13.56 MHz on ISO/IEC 18000-3 air interface and at rates ranging from 106 kbit/s to 848 kbit/s. NFC can involve an initiator and a target. The initiator actively generates an RF field that can power a passive target. This enables NFC targets to take very simple form factors such as tags, stickers, key fobs, or cards that do not require batteries. In other embodiments, the NFC functions can be integrated into a device, such as the mobile phone 34. NFC peer-to-peer communication is of course possible, where both devices are powered. For instance, the electronic device 34 and EGM 2 can be configured to implement a peer-to-peer communication.

Wireless interface 18 can be used to accept information from a digital wallet application, such an E-wallet application. E-wallets can store passwords, credit card numbers, email contacts and identification data like driver's license or social security numbers. In some instances, an E-wallet can be linked to a bank account. An E-wallet application can be used to transfer "cash" electronically to an EGM that can be used for wagers. When funds are received electronically, such as via an E-wallet transaction, the EGM 2 can be configured to store an electronic record of the transaction in a manner similar to cash transactions involving physical currency. The E-wallet like application can also be used to store a loyalty program account information that can be used to initiate a player tracking system on the EGM 2

In one embodiment, a copy of the mobile device display output on the EGM 2 can be used with in an E-wallet application. For instance, a copy of images associated with a funds transfer application executed on the mobile device can be displayed on the EGM 2. The images can show one or more states of the funds transfer application as information is transferred from the mobile device 34 to the EGM 2 or from the EGM 2 to the mobile device. When a user can see a copy of the image on the EGM and the image on their cell phone, a user gains some assurance that a communication session between the mobile device 34 and the EGM 2 is active and the devices are properly communicating information.

If the user doesn't see the copy of their device on the EGM 2 or sees an image of a mobile device different from the one shown in the device, a user has some indication that there is a problem with the transaction. In response, the user can cancel the transaction and/or notify an attendant of the problem. As an example, when the EGM 2 is configured to communicate wirelessly with a mobile device, it may be possible for the EGM 2 establish communications with a nearby mobile device not controlled by the user. Thus, when the EGM 2 display a copy of mobile device screen display different from their mobile device, the user can initiate a remedial action. For instance, the EGM 2 can be configured to terminate all of its current communication sessions in response to a selection received from the user. Then, a new attempt can be made to initialize a communication session between their mobile device and the EGM 2. For instance, their mobile device can be placed proximate to an NFC interface to initialize the communication session.

As is discussed in more detail with respect to Figs. 6 and 7, other wireless interface protocols can also be implemented on EGM 2. For instance, the EGM 2 can be configured to provide Wi-Fi and/or Bluetooth™ communications. These protocols can be used in lieu of or in combination with NFC. For instance, an NFC communication can be used to instantiate a Wi-Fi or Bluetooth™ communication between the EGM 2 and portable electronic device 34, such as secure pairing using one of these protocols. To initiate a pairing, an NFC and Bluetooth enabled EGM 2 can be tapped by an NFC and Bluetooth enabled mobile device, such as 34, to instantiate Bluetooth pairing between the devices. Instantiating pairing between the EGM 2 and an NFC enabled device, such as mobile device 34, can save time related to searching, waiting, and entering codes. In another example, a gaming device, such as EGM 2, can be configured as an NFC enabled router, such as a router supporting a Wi-Fi communication standard. Tapping an NFC enabled device to an NFC enabled and Wi-Fi enabled gaming device can be used to establish a Wi-Fi connection between the two devices.

An NFC interface on an EGM 2 can be used to receive information that allows a higher speed communication to be set-up between the EGM 2 and another NFC enabled device such as mobile device 34. The higher speed communications can occur via wireless interface 18 or another wireless interface on the EGM 2. The higher speed communication rates can be used for expanded content sharing. For instance, the higher speed communications can be used to allow the mobile device 34 to stream a copy of images output to its display to the EGM 2 where the streamed images can be displayed on the EGM 2.

One function that can be performed in a gaming environment is tracking of individual player's game play. Based upon an amount spent on game play, a player can earn rewards often referred to as comps. For instance, a player can be offered a free meal or a free night of lodging based upon their game play.

In traditional player tracking, a player inserts a player tracking card into card reader, such as 36. A status indicator can be provided that indicates that information from the player tracking card has been read by the card reader. For instance, a lighted bezel surrounding the card reader slot can be lit green when data has been correctly read from the player tracking card and can be lit red when a card is inserted into the card reader slot but data has not been read from the card.

The card reader 36 may not correctly read data from the player tracking card for a number reasons. For instance, the player tracking card being demagnetized, the card not being inserted incorrectly or the card reader 36 not working properly can result in data being correctly read from the card. When the card reader reads account data from the card, such as an account number, then the data can be sent to a remote device, such as server, that includes a database with records of different player tracking account. When the remote server recognizes the account number read from the player tracking card as being associated with an active player tracking account, the remote server can return information associated with the account to the EGM 2, such as a name associated with the account, to the EGM 2. Then, a player tracking function can be initiated where game play information generated on the EGM 2, such as amounts won or lost during the player of wager-based game are stored to the player tracking account associated with the player tracking card.

Typically, the player tracking session continues until the player tracking card is physically removed from the card reader. The card reader 36 and/or the EGM 2 don't attempt to verify whether the person associated with the card is actually at the EGM. Thus, multiple different people can play the EGM 2 and game play information associated with the different players can be credited to the player tracking account associated with the player tracking card inserted in the card reader 36. One way that individuals try to cheat the casino is to get extra copies of their player tracking card and then insert them with EGMs at different locations within the casino. Until someone removes their player tracking card from an EGM 2, such as another player or a casino attendant the individual can collect points associated with game play at each EGM in which their card is inserted.

Another problem that player's have with their player tracking cards is unintentionally leaving the EGM 2 without their card. To prevent this situation, some players attach a cord to their card which is anchored to their body. Another problem that player's have is forgetting to bring their player tracking card to the casino or forgetting to insert their cards in an EGM when playing at a particular EGM 2. In these situations, casinos typically provide the player with little recourse other than allowing the player to get a replacement card.

In the embodiments described herein, mobile devices, such as 34, can be utilized in the context of a player tracking program. In particular, a mobile device, such as 34, can be used to store and transmit player tracking information, such as a player tracking account number, to the EGM 2 in lieu of a player tracking card. Adapting a mobile device into a gaming environment in a function similar to a player tracking card can result in a number of unique issues. Some of these issues can be addressed by displaying a copy of a user's mobile device screen display on the EGM as is described in the following paragraphs.

As described above, when a player tracking card is used, the card reader detects the insertion of a player tracking card, correctly reads data from the card and it is recognized by a player tracking server, a player tracking session can be initiated. The player tracking session lasts as long as the player tracking card is detected. With a mobile phone, the EGM can be configured to make a connection with a nearby mobile device and receive player tracking information. However, if multiple devices are nearby it may be difficult for the EGM to determine which nearby mobile device is associated with the user actually playing the game. Thus, it may be possible that an EGM receives player tracking information from a mobile device not associated with the current user. Displaying a copy of the mobile device's display screen to the EGM allows a user to confirm whether or not the player tracking information used to initiate the player tracking session was received from their mobile device and not another player's mobile device.

With a card, a player tracking session can be maintained until the card is removed from the card reader. With a mobile device, a landing or some other area can be provided where the EGM 2 is configured to detect the presence of a mobile device placed in the landing area. A disadvantage of this approach is that increases the possibility of the player forgetting and losing their mobile device. Player tracking cards are inexpensive. Mobile devices, on the other hand, are quite expensive. Thus, users may not wish to remove and place their mobile devices in a location where EGM 2 can detect the device.

When a device remains on a user's person, such as in the pocket, the EGM 2 can detect the presence of a wireless device via continual wireless communications with the mobile device or the signal strength detected from the mobile device remains above a certain level. When wireless communications are lost or the signal strength drops below a certain level, the EGM 2 can end the player tracking session. In this scenario, the player moving around or changing positions may cause a signal to be lost or drop below a certain level such that the player tracking session is ended while the player still remains at the EGM 2 and is still playing. However, the loss of connection or drop of signal can also be caused by the player intentionally leaving the EGM 2, such as for the purposes of initiating game play on another device. Displaying a copy of a mobile device screen display to the EGM, optionally updating it on a regular basis and then ceasing the display at the end of a player tracking session allows a user to verify that a player tracking session involving information received from their device is still enforce as well as notifies the user when the player tracking session has ended.

In addition, a player may wish to utilize their mobile device at the EGM 2. Removing from a pocket or purse increases the likely-hood of a user setting the device down and then subsequently forgetting it. Further, game play can be interrupted as the user utilizes the mobile device. Providing control of the mobile device from the EGM via a copy of the mobile device screen display on an EGM touch display allows for a more seamless use of a mobile device at the EGM 2 while reducing the interruption associated with removing the device and reducing the possibility of losing the device.

In one embodiment, additional indicators besides the copy of the mobile device screen display 32b can be displayed on the EGM 2 to indicate a status of a player tracking session. For instance, a colored status indicator can be displayed near the copy 32b of the mobile device screen display. The colored status indicator can be a shape, such as but not limited to rectangular bar. The color of the colored status indicator can be used indicate a status of the player tracking session. For instance, green can indicate the player tracking session associated with the copy of the mobile device screen display 32b is active while red can be used to indicate the player tracking session is no longer active. In one embodiment, the color indicator can surround or partially surround the copy of the mobile device screen display 32b. For example, in Fig. 1, the colored status indicator 40 surrounds, the copy of the mobile device screen display 32b.

Other status indicators can also be used alone or in combination with the copy of the mobile display screen 32b to indicate a status of a player tracking session and/or a communication session involving information received from a mobile device 34. For instance, text and/or symbols can be used to indicate a status of a player tracking session. Further, the status of the player tracking session and the communication session with the mobile device that provided the copy of the display screen 32b can be indicated separately. For instance, the copy of the mobile device screen display 32b can be used to indicate that player tracking information was received from the mobile device 34, a second status indicator can be used to indicate whether the player tracking session initiated using the player tracking information from the mobile device is still enforce and a third status indicator can be used to indicate whether the EGM 2 and the mobile 34 are still engaged in an active communication session.

As another example, when player tracking information is not received from the mobile device 34, the copy of the mobile device display 32b can be used to indicate the EGM 2 is in communication with the mobile device and a second indicator, such as the hollow rectangle surrounding the copy 32b can be used to indicate that a player tracking session is active or not. The player tracking session can still be active because the player tracking information can be received from an alternate source, such as a player tracking card inserted in card slot 36. Thus, at different times and in different contexts, such as whether player tracking information has been received or not, the copy of the mobile device screen display 32b can be used to indicate different things.

### Communications between and EGM and a Mobile Device

Next some details regarding how mobile device information can be handled and routed on an EGM and within a gaming system are described with respect to Figs. 2A and 2B. Figs. 2A and 2B are block diagrams illustrating communication pathways between a server 10, an EGM 2 including a game controller 50 and a mobile device. In one embodiment, as illustrated in Fig. 2A, the communications between the mobile 34 device and the EGM 2 can be through an intermediary device, such as server 10. For instance, the mobile device 34 can establish communications with the server 10 via the wireless interface 18a. Then, via network interface 56 on the EGM 2, the server 10 can establish a communication link with the EGM 2 that allows communications between the mobile device 34 and the EGM 2.

In another example, the wireless interface 18a can be configured as a wireless access point that provides access to an internal network 55. As an example, each bank of EGMs can be equipped with a wireless access point. A plurality of EGMs can be coupled to the internal network 55. The mobile device 34 can access the wireless interface 18a via a direct connection (e.g., a Wi-Fi connection) and then can access the internal network 55 to communicate with one or more of the EGMs or servers. In another example, via a cellular data communication on the network 45, the mobile device can access the wireless interface 18a and be routed onto internal network 55 to communicate with EGMs or servers. The cellular data communications can be on a network associated with the mobile device 34 service provider, such as a 3G or 4G network. Once on the network 55, the mobile device can communicate using one or more protocols instantiated on the network, such as an NTP (network time protocol).

In one embodiment, the EGM 2 may not include a wired or wireless interface that allows direct communications between the EGM 2 and the mobile device 34. In other embodiments, the EGM 2 can include an interface that allows for direct communications between the mobile device 34 and the EGM 2 but optionally the communications can also be performed via the server 10. In yet other embodiments, as described above, the server 10 and the EGM 2 can be configured to allow certain information to be transmitted directly to the EGM 2 while other types information are communicated only through a server to the EGM, such as via server 10. Thus, in some instances, the gaming system may allow the mobile device to communicate simultaneously with multiple devices. For example, the mobile device can be linked to the server 10 and can be simultaneously linked to EGM 2 via a direct connection.

Once information, such as a copy of mobile device screen, arrives at the EGM 2 via the network interface it can be routed to different devices via different communications pathways. For instance, in one embodiment, the information can be sent to the game controller 50 which can then output to the main display 54 and/or the secondary display 58. In case of a "service window" embodiment, the game controller 50 can provide resources to a remote device server 10 that allows the server 10 to output content to the main display 54 and/or the secondary display 58. In another embodiment, the information can be sent to a secondary device 52, such as a player tracking unit, which can output it to the secondary display 58 or the main display. The secondary device can also be configured to provide resources that allow information to be output under control of server 10. In yet other embodiments, information can be routed directly from the mobile device to the main display 54 or the secondary display 58 from the network interface 56 for output to one or both of the displays.

In particular embodiment, the game controller 50 may not include features that allow it to communicate with or respond to information received from a mobile device. For instance, the game controller 50 can be on an older device that has been deployed without mobile device interaction capabilities. In these embodiments, the information and/or commands related to mobile device communications can bypass the game controller. For instance, the information can go to the secondary device for output to a display, such as secondary display 58.

The communication pathways described with respect to Figs. 2A and 2B can be instantiated alone or in combination with one another. For example, the only communication pathway to allow a copy of mobile device screen display to be output can be from the network interface 56, to the game controller 50 to the main display 54. As another example, the only communication pathway can be from the network interface 56 to the secondary device 52, to the secondary display 58. In yet another example, both communication pathways can be available and logic on the server 10 or on the EGM 2 can be configured to determine which communication pathway to use.

In Fig. 2B, communications between a server 10, a mobile device 34 and EGM 2 are described. In this example, the EGM 2 includes a wireless interface 18b that allows information to be directly received from the mobile device 34. A wired interface can also be provided. The information can be a copy of the mobile device screen display, such as copy of a frame buffer or information including commands and data, which allows a copy of the mobile device screen to be rendered and output to one of the displays.

Once the information has arrived on the EGM 2 it can routed to different devices via different communication pathways. For instance, communications between the mobile device 34 and server 10 can be enable by routing information from the wireless interface 18b directly to network interface 56, to the network interface 56 via the secondary device 52, to the network interface via the game controller 50 or to the network interface 56 via first the game controller 50 and then the secondary device 52. When the mobile device 34 provides information that can be output to a display, such as a copy of its mobile device screen display, it can be routed to the game controller 50 and then directly out to the one of the displays (e.g., 54 or 58) or the game controller 50 can route the information to another device, such as the secondary device 52 which then outputs the information to one of the displays.

### Display Positioning and Composition

Next, with respect to Figs. 3A-3E, examples of screen configurations on an EGM configured to output a copy of a mobile device display are described. In particular, Figs. 3A-3E are block diagrams illustrating a copy of a mobile device screen display on a main display or secondary display of an EGM. An EGM can include a main display where a wager-based game is presented. On a mechanical slot type EGM the main display can be mechanical reels. In this instance, the copy of the mobile device screen may not be output to the main display but can be output to a secondary video display. On a video slot type EGM, the main display can include one or more video display screen layers. For instance, the main display can be a multi-layered display with a first display layer stacked upon a second display layer, such that information on the second display layer is visible through the first display layer. On gaming machines where the main display is a conventional display with a single display layer, a copy of the mobile device screen display can be output to the single display layer. On gaming machine where the main display is a multilayered display, a copy of the mobile device screen display can be output to one or more of the display layers.

In one embodiment, as shown in Fig. 3A, when the EGM is not receiving a copy of the display screen from a mobile device the screen 100a can be entirely filled by the game 102. The EGM can still be in communication with the mobile device but may not be able to output a copy of the mobile device screen display. For instance, the mobile device may not be executing software that allows for this function.

When the EGM receives a copy of a mobile device screen display, the copy can be displayed such that the game 102 at least partially surrounds the copy. For instance, in screen 100b, the copy 104 is positioned in the bottom left corner of the display. In addition, a status indicator 108 is displayed above the copy 104 and player tracking information 110 is displayed above the copy 104 and the status indicator 108. The status indicator 108 can be used to convey a status of a connection with the mobile device or a status of a player tracking session. The player tracking information 110 can include player tracking information, such as player's name or a number of points.

In one embodiment, the status indicator 108 can include one or more symbols or messages that when displayed convey a status of some function. For instance, a first symbol can be displayed when communications between the EGM and the mobile device are active and a second symbol can be displayed when the player tracking session is active. The first and second symbol can be displayed side by side with one another. In another example, all the symbols can always be displayed but their color may be different to indicate a status of the function.

The game presentation for game 102 can be configured such that important information, such as information that indicates the outcome of a wager-based game, is not positioned in the area where the copy 104, the status indicator 108 and the player tracking information 110 are displayed. When 104, 108 and/or 110 are displayed, a portion of the game presentation can be obscured. In another embodiment, the game presentation for game 102 can include a blank area for displaying the copy of mobile display screen 104.

In other embodiments, as shown in screen 100c in Fig. 3C, the portion of the game presentation is not obscured by the copy 104. In screen 100c, the game presentation for game 102 is displayed and it entirety but is compressed to make room for copy 104, status indicator 108 and player tracking information 110. The area on screen 100c above 110 can display additional content. In one embodiment, the content 106 can be from a remote server as part of a service window (see Fig. 6 for more detail). Also, copy 104, status indicator 108, player tracking information 110 and server 106 can be all output under control of a remote server as part of a service window.

When a copy of the mobile device screen display 104 is not displayed, the game presentation for game 102 can fill the entire display as shown in screen 100a. As described, the copy 104 may not be displayed when a mobile device is not coupled to the EGM 2. In addition, the EGM configured can be configured with an option that allows a player to select whether to display or not display copy 104 at a particular time. For instance, the player may select not to display copy 104 because they prefer the game presentation for game 102 to occupy the entire display.

In Figs. 3D and 3E, screen shots, 120a and 120b, of a copy of a mobile device screen display are shown on a secondary display where the game presentation for a wager-based game is not shown. For instance, the secondary display can be coupled to a player tracking unit. In another example, secondary display can be located in a top box on an EGM and used to output secondary content related to a play of wager-based game, such as a bonus presentation content. In screen 120a, at a first time, secondary display information 122, such a bonus presentation content or advertising associated with a player tracking unit is described.

In screen 120b, at a second time, a copy 104 of the mobile device screen display can be displayed. On the secondary display, depending on its size, the copy of the mobile device screen display can occupy a larger portion of the screen. For instance, in screen 120b, the copy spans from the top to the bottom screen. For smaller displays, a larger portion of the screen can be used to allow details associated with the copy 104 to be seen by a player.

On the left side of the screen 124 and the right side of the screen 126 not occupied by copy 104, different content can be displayed. For instance, player tracking information or status indicators can be display 124 or 126. As described above, all or a portion the output of content to the secondary display, such as 104, 124 and/or 126 in screen 102b, can be controlled by remote device, such as a remote server.

Next with respect to details of the copy of the mobile device screen output to an EGM display are described. Fig. 4A-4D are block diagrams illustrating mobile device screen displays output to a display on an EGM for a mobile device in different states. In one embodiment, the mobile device is optionally controlled from the EGM. For instance, the EGM display can be a touch screen display and touch inputs received from the touch screen in areas above the display where the copy of the mobile device screen display is output can be used to control functions on the mobile device.

A copy of the mobile device screen display can be output when the mobile device is in different states. Thus, as the state of the mobile device screen display changes and the mobile device screen display changes, the copy displayed on the EGM can change. For instance, each of copy of the mobile device screen display 104a, 104b, 104c and 104d can represent a different states of a single mobile device that are output to an EGM during a single communication session between an EGM and a mobile device. As described above, the states on the mobile device may change in response to control input received at the EGM and transmitted to the mobile device.

Screen 104a shows an example of a copy of a mobile device in a "home" state without an application running. The home state is usually at a highest level in a navigation interface on the device where many different sub-levels are available from this level. The screen 104a includes a status section 155 at the top. In the status section there are symbols indicating signal strength 152, a data network 154, a current time 156 and amount of charge or charge state of the device 158. Typically, a mobile device will have one or more status indicators displayed at any one time. However, the type of status indicator, the number of status indicators and the position of the status indicators can vary depending on settings selected by a user and also vary from device to device.

Below the status section 155, different applications are displayed. The applications can be displayed as icons. When a user selects one of the applications, the application is launched on the device. For instance, application 158 is a weather application and application 160 is a flight information application. Behind the icons, a background 162 can be provided. As examples, the background can be a solid color, a pattern or an image. The image can be selected by a user.

To prevent an objectionable image from being output to an EGM display, in some embodiments, content filtering such as image recognition software can be utilized. The content filters can be used to detect objectionable content, such as objectionable text or nudity in the copy of the display screen received from the mobile device. When objectionable content is detected, it can be edited out of the screen. For instance, when objectionable content is found in the background 162 then the background can be modified to a solid color to remove the objectionable content or obscured so that the objectionable content is not discernable.

In one embodiment, logic can be provided to modifying the copy of the mobile device screen display received from the mobile device before it is displayed to the EGM. For instance, software logic on the server or the EGM can be configured to detect the background 162 around the icons and modify it so that it is always rendered with a content selected by the gaming machine operator. When the copy of the mobile device screen display is generated, the icons and their position can be rendered. However, the background area surrounding the icons, such as area 162 around icons 158 and 160, can be rendered with approved content selected by the gaming operator, such as a solid color, an approved pattern or an approved image. Other data can be edited out of the copy mobile device screen display. For instance, the time 156 can be edited out in some embodiments.

Multiple pages of applications can be provided. In some instance, one section 168 can include commonly used applications that are constant from page to page. For example, section 168 includes a phone application 164 and a messaging application. In Fig. 4B, screen 104b shows a copy of the mobile device screen display after the phone application 164 is selected and launched from screen 104a. The application can be launched via input received at the mobile device or in some instances, via input received at the EGM and transmitted to the mobile device.

In one embodiment, an application available on the mobile device can be mapped to a mechanical button on the gaming machine, such as a mechanical button with an embedded display. For instance, the phone icon 164 can be displayed on a mechanical button on the EGM. Initially, the mobile device can be in a state as represented by screen 104a. In response to the mechanical button being actuated, a signal can be sent to the mobile device that causes the phone application to be launched. After the application is launched on the mobile device, a copy of the mobile device screen 104b including the launched phone application can be displayed on the EGM.

In screen 104b, after the phone application 164 is launched, a key pad, function buttons and input number are displayed in area 168. In this example, the layout and position of the status section 155 and commonly used application section 168 has remained constant from screen 104a to 104b. However, the time in the status section 155 has changed.

In some embodiments, the numbers can be selected and the call initiated in response to inputs received at the EGM and then transmitted to the mobile device. If the user is wearing a head set in communication with the mobile device then the call can be made without the user removing the device from their person. As described above, this mode of operation can be more convenient to a user and may lessen the likely hood of the device being lost.

In Figs. 4C and 4D, states of a mobile device as represented by the copies of the mobile device screen displays 104c and 104d. The screen displays 104c and 104d can be associated with a gaming related application that has been launched. In 104c, a welcome message 170 including a casino name and player name and a number of player tracking points 172 is displayed. The player tracking information, such as current number of points, may have been received at the mobile device from a remote device, such as a player tracking server, after the mobile device has provided a player tracking account information to the remote device. A number of functions are provided within the application. These functions include a drink ordering function 176, a dining application 178, a lodging application 180 and a messaging application 175 that allows a player to receive a message from a gaming enterprise, such as a casino owner.

Selecting one of the applications can change the state of the mobile device screen display and hence the copy of the mobile device screen display output to the EGM. In 104d, an example is shown where the drink application 176 has been selected. The screen 104d shows a message 182 requesting the user to select a drink. Drink selections 184 are listed below the message 182. A selection of one of the drink selections may bring up additional choices that can be selected, such as different types of beer. When a final selection has been made, the order button can be selected to order the drink. The drink information can be sent to a remote device where an individual preparing the order and an individual delivering order can receive the necessary information to fulfill the order. As described above, the inputs used to navigate the application can be received on the EGM.

In one embodiment, an approved application, such as the gaming application shown in 104c and 104d, may have to be launched and displayed on the mobile device display before a copy of the mobile device screen display is output to a display on the EGM. The EGM or a remote server can be configured to perform a handshake with the application that allows the EGM to verify that an approved application is executing on the mobile device and is outputting approved content to the mobile device screen display. Using this approach, the likely hood of objectionable content being output to the mobile device display and then to the EGM display can be reduced.

In some instances, the application can allow a user to select approved content to display, such as the background 174 used in the application shown in 104c. For instance, the user may be able to select from among different approved content selections, such as different approved background images. However, the user may not be able to use custom content to reduce the possibility that objectionable material can be output the EGM display.

Different methods can be used to send or generate the copy of the mobile device screen display to the EGM. In one embodiment, a copy of the frame buffer associated with the mobile device display can be sent to the EGM. For instance, an RFB (remote framebuffer) protocol can be used on the mobile device. RFB is a protocol for remote access to graphical user interfaces. Because it works at the framebuffer level, RFB is applicable to all windowing systems and applications, including X11, Windows and Macintosh. RFB is the protocol used in Virtual Network Computing (VNC) and its derivatives.

In a particular embodiment, the mobile device can be configured as a VNC server. Virtual Network Computing (VNC) is a graphical desktop sharing system that uses the RFB protocol to remotely control another computer. It transmits input events, such as keyboard, events from one computer to another, relaying the graphical screen updates back in the other direction, over a network. VNC is platform-independent - a VNC viewer on one operating system may connect to a VNC server on the same or any other operating system. There are clients and servers for many GUI-based operating systems and for Java. Multiple clients may connect to a VNC server at the same time. Popular uses for this technology include remote technical support and accessing files on one's work computer from one's home computer, or vice versa.

A VNC system consists of a client, a server, and a communication protocol. The VNC server is the program on the machine that shares its screen. The server passively allows the client to take control of it. Thus, in the case of a mobile device-EGM interaction where the mobile device is controlled from the EGM, the mobile device can be configured as a VNC server. The VNC client (or viewer) is the program that watches, controls, and interacts with the server. The client controls the server. On the EGM, a VNC client can be instantiated that allows inputs received at the EGM, such as touch screen inputs, to be correctly interpreted to control the mobile device, such as to navigate within an application or navigate within the devices home state to launch an application.

The VNC protocol is based on one graphic primitive from server to client ("Put a rectangle of pixel data at the specified X,Y position") and event messages from client to server. In the normal method of operation a viewer connects to a port on the server (default port 5900). Alternatively a browser can connect to the server (depending on the implementation) (default port 5800). And a server can connect to a viewer in "listening mode" on port 5500. One advantage of listening mode is that the server site does not have to configure its firewall to allow access on port 5900 (or 5800); the onus is on the viewer, which is useful if the server site has no computer expertise, while the viewer user would be expected to be more knowledgeable.

The server (mobile device) can send small rectangles of the framebuffer to the client. In its simplest form, the VNC protocol can use a lot of bandwidth, so various methods have been devised to reduce the communication overhead. For example, there are various encodings (methods to determine the most efficient way to transfer these rectangles). The VNC protocol allows the client and server to negotiate which encoding will be used. In one embodiment, this negotiation can be performed when the devices, such as an EGM and mobile phone are paired. The simplest encoding, which is supported by all clients and servers, is the raw encoding where pixel data is sent in left-to-right scanline order, and after the original full screen has been transmitted, only transfers rectangles that change.

One example of a VNC based standard that may be adapted for use in a gaming environment is Mirrorlink™. MirrorLink™ (previously known as Terminal Mode) has been developed with the objective to provide a technology, offering seamless connectivity between a smart phone and the in-vehicle infotainment system in car. MirrorLink™ is specified around a set of well established, non-proprietary standards. It uses IP technologies in order to be independent of the physical transport mechanism. Legacy connectivity solutions, like Bluetooth™ HFP (Hands Free Profile) or A2DP (advanced audio distribution profile) are also supported. In addition, MirrorLink™ can support wired and wireless connectivity. Besides access to the mobile device's user interface, Universal Plug and Play (UPnP™) is used to give access to only a limited set of pre-advertised applications. Virtual Networking Computing (VNC™) is used to replicate the phones display and to provide key and touch events back. Besides Bluetooth™, audio can be streamed using the Real-Time Protocol (RTP) over UDP (User Datagram Protocol). In a gaming environment, audio streamed from the mobile device can be output via an audio device on the EGM if desired.

In a car environment, the consumer gets into his/her car, plugs the phone into a USB cable and can immediately enjoy all phone applications within the car. On an EGM, as described above, a wired or wireless interface, such as a USB interface can be provided for coupling a mobile device to the EGM. Then, all or a portion of the mobile device display can be replicated on the EGM.

In particular embodiments, like MirrorLink,™ only a limited set of pre-approved applications may be available for use on the EGM from the mobile device. The pre-approved applications that are available may depend on the approval of a gaming regulatory body. Thus, the pre-approved applications that are available can vary from jurisdiction from jurisdiction. Further, the pre-approved applications that are available can depend on the approval of a gaming operator. For instance, a first gaming operator can allow a first set of applications to be made on their EGMs while a second gaming operator can allow a second set of applications to be made available on their EGMs.

In yet other embodiments, different EGMs, such as higher denomination EGMs, can allow a different set of applications than lower denomination EGMs. Further, the applications that are allowed can vary from player to player. For instance, a high status player registered in a loyalty program and recognized by the EGM can be allowed to use a set of applications that is different from a lower status player or an unregistered player. The EGMs described herein can be configurable to accommodate different application availability that can vary according to gaming jurisdiction, operator preference, machine type and player type.

A mobile device can display various combinations of applications on its display. Some of these applications can be pre-approved for use on the EGM and others may not be approved. A device in the gaming system can be configured to detect images, such as images captured in a copy of the frame buffer, received from a mobile device, that allow applications to be selected and launched on the mobile device. In one embodiment, the applications that are not approved for use can be removed from image displayed on the EGM or marked in some manner in the image displayed on the EGM to indicate the application is not approved for use on the EGM. For instance, a line can be drawn through non-approved applications or the non-approved applications can be rendered with a reddish tinge.

In addition, the EGM can be configured to determine the touch areas associated with the non-approved applications and then not send touch input back to the mobile device corresponding to these areas. Thus, when a recognized non-approved application is selected on the EGM based upon the copy of the mobile device display screen displayed on the EGM, it will not be launched on the mobile device from the EGM because the EGM is configured not to send touch inputs associated with the recognized non-approved application. In one embodiment, the EGM can be configured to render selectable images for approved applications in a common area that is different from the location where the selectable images are displayed on the copy of the mobile device screen. When an approved application is selected from the common area, the touch input can be mapped to the location where it appears on the copy of the mobile device display screen and touch input can be sent back to the mobile device to correspond to a selection at its position on the mobile device. When the mobile device receives the touch input, it is interpreted as if the selection were made on the mobile device touchscreen and in response the selected application can be launched.

In another embodiment, the mobile device can send high-level commands to the EGM that allows a copy of the mobile device screen display to be reconstructed on the EGM. For example, an application, such as the gaming application shown in screens 104c and 104d, can generate high level commands, such as place text message 170 starting a certain location, place the casino points 172 at another location, use a background 174 of a certain type, and display icons 176, 178, 180 and 175 at particular locations. A related application executing on a server or the EGM can receive and interpret the commands to recreate at least a portion of the mobile device screen, such as the area below the status section 155. For instance, a server can recreate screen 104c and then send it to an EGM for output to an EGM display.

Some operating systems provide remote desktop applications that allow a remote desktop to be displayed on another device. If a mobile device provides a similar application, then it can be used to recreate the current state of mobile device screen display, such as screen 104a. These types of applications can vary from operating system to operating system. Thus, using this type of application may require the mobile device to send identifying information related to one or more of a 1) mobile device type, 2) its operating system and 3) screen dimensions to the EGM or the server. Information such as the screen dimensions may be useful in other applications as well, such as the VNC application that specifies the locations to place pixel data.

One advantage of the approach where a copy of a mobile device screen display is reconstructed from commands received from a mobile device is that all of the content used to recreate the mobile device on a gaming system server or an EGM can be pre-approved. Thus, if a user hacks an application on their mobile device to render objectionable content, such as objectionable image content, the objectionable content is not transferred to the EGM. For example, the background data 174 in screen 104c can be hacked such that objectionable content is displayed. However, when the hacked application sends information used to generate a copy of screen 104c, it may send a command, such as "use background 1," where approved background patterns, 1 to N, are available and stored on the device that generates the copy of the mobile device screen display.

Thus, on the EGM or server, an approved background image can be selected according to the received instructions to render the copy of the mobile device screen display. In this instance, when the application on the mobile phone has been hacked in some manner, the rendered copy of the mobile device screen may not completely match the mobile device screen display which includes objectionable or just custom content. However, the non-approved objectionable or custom content will not be output to the EGM display. Another advantage of this approach is that it may reduce the amount of information that is transferred between the mobile device and the EGM or server.

In yet other embodiments, a combination of high-level instruction methods (e.g., like a remote desktop application) and a frame buffer capture methods (e.g., like RFB) can be utilized. For example, in Fig. 4A, a copy of the display screen between the status section 155 and the common application section 168 can be captured from a frame buffer on the mobile device and sent to an EGM. In addition, high level instructions can be sent to draw different items in the status section 155 and commonly used application section 168. For instance, the high level instructions can specify the EGM to draw a status items associated with the interaction between the mobile device and the phone to replace the current status items shown in 155. In addition, in section 168, high-level instructions can be sent to the EGM to render icons for pre-approved applications that can be utilized on the EGM. Upon receiving these instructions, the EGM can render the icons for the pre-approved applications.

In particular embodiments, a mobile device can have multiple applications open and executing simultaneously on its display. For instance, a tablet device may have multiple applications open and executing on different portions of its display. In one embodiment, only a portion of the mobile device display screen can be copied and rendered on a gaming device, such as an EGM. For instance, a first half of a tablet computer display screen can be selected to have a copy rendered on the EGM while the second half is not rendered on the EGM. Applications placed in the first half can be launched and controlled on from EGM. Thus, a user may be able to move applications into the controlled portion or remove applications from the controlled portion of the display screen where applications moved in the controlled portion can be controlled from the EGM and applications removed from the controlled portion can't be controlled from the EGM. An application executing on the mobile device and/or the EGM may allow a user to designate a specific portion on the mobile device display screen that is to be copied to the EGM display and possibly controlled from the EGM. In another example, the portion of the display screen with an open application can be copied to the EGM display while portions of the display screen around the open application may not be rendered.

### Methods in a Server and an EGM

Next details of a method on a server involving the output of a mobile device screen display to an EGM are described. Fig. 5A is a method 400 in an EGM for displaying a copy of a mobile device screen display to an EGM display. In 402, communications can be established with a mobile device. In one embodiment, a secure pairing between the mobile device and the EGM can be established using a protocol such as Bluetooth™ or Wi-Fi. If present, an NFC enabled communication interface on the EGM can be used to transfer information that allows a secure pairing to be established. In another embodiment, communications between the mobile device and the EGM can be enabled via an intermediary device. For instance, communications can first be established between a mobile device and a remote server and then communications can be established between the remote server and the EGM such that information can be transmitted between the EGM and the mobile device.

After the initial communications are established, the EGM and mobile device can exchange information. In one embodiment, the mobile device can send a player tracking account number to the EGM. The EGM can send this information to a remote server which can transmit additional information associated with the player tracking account number such as whether it is a valid account and a current point total. Some player tracking information that is received can be sent to a mobile device, such as a current point total which can be output to the mobile device display. If valid, in 404, the player tracking account number can be used to instantiate a player tracking session on the EGM where game play information, such as amounts wagered, won and lost are associated with the player tracking account number that was received.

In 406, a mobile device screen display and/or input sharing interface can be established. In one embodiment, the EGM can exchange information with the mobile device to determine that the mobile device is currently executing an approved application that outputs approved content on the mobile device display. The interface may allow all or a portion of the mobile device screen display output on a mobile device to be also output to an EGM display. In addition, in some embodiments, the interface can also allow remote control of the mobile device via inputs received at the EGM. For example, a copy of a mobile device screen application can include a number of icons associated with different applications. At the EGM, the application can be selected. Data can be sent to the mobile such that the selection of the application on the EGM causes the mobile device to launch the application. If the copy of the mobile device screen display is updated at some interval, then the copy of the mobile device screen display output to the EGM can be updated to show that the application has been launched on the mobile device. In one embodiment, the mobile device can be configured as a VNC server and the EGM can be configured as VNC client to the mobile device to allow the mobile device graphical interface to be controlled from the EGM.

In 408, the EGM can receive mobile device screen content, such as frame buffer data from the mobile device or instructions for generating a copy of the mobile device screen display. In 410, the EGM can check the mobile device screen content for objectionable material. The check can include applying pattern recognition software for identifying objectionable images, such as pornographic images, or objectionable messages, such as curse words. If objectionable images or objectionable messages are detected, the images or objectionable messages can be obscured or otherwise rendered non-viewable in the copy of the mobile device screen display output on the EGM. In one embodiment, if any objectionable images or messages are detected in the copy of the mobile device screen display then the copy in its entirety may not be output to the EGM display.

In 412, the checked copy of the mobile device screen content can be output to the EGM display. As described above, it may be possible generate a copy of the mobile device screen display using high level commands received from the mobile device and approved content stored on the EGM or a remote server. Since only approved content is used to generate the copy of the mobile device screen display, it may not be necessary to check the copy of the mobile device screen display for objectionable content before it is output to the EGM display.

In one embodiment, a status interface can be generated near the copy of the mobile device screen display. The status interface can include various status indicators, such as but not limited a status indicator to indicate a player tracking session has been instantiated, a status indicator to indicate a status of a communication session between the mobile device and the EGM, a status indicator to indicate the type of connection, such as blue tooth™ or Wi-fi, a status indicator for indicating the bandwidth speed of the connection between the devices, a status indicator to indicate a signal strength and combinations thereof. In 414, the status interface can be update. For instance, it can be updated to indicate a connection between the mobile device and the EGM is lost.

In 416, input data for controlling the mobile device can be received. In one embodiment, the input data can be from a touch screen interface above the copy of the mobile device screen display output on the EGM. The input data can be sent to the mobile device is an format that causes a change in state in the mobile device such as an application on the mobile device to be launched. In one embodiment, the EGM can be configured to process the input data in some manner before it is sent to the mobile device. For example, if the copy of the mobile device screen display is displayed with screen dimensions different from the screen dimensions used on the mobile device, the touch screen input data can be interpolated from coordinates in which it is received on the EGM to coordinates consistent with the mobile device display. The interpolation may allow the mobile device to correctly interpret the touch screen input data, such as mapping the data to specific icons output to the mobile device display.

In 418, the input data received at the EGM can be sent to the mobile device. The input data can cause the state of the mobile device and the contents of the mobile device screen display to change. For example, the input data can cause the mobile device to launch an application which changes the contents of the mobile device screen display.

After the initial copy of the mobile device screen display is sent and output to the EGM, the copy can be updated at some time interval. In one embodiment, only the initial copy of the mobile device screen display sent at the time communications are established between the EGM and mobile device is displayed and the copy is not updated during the communication session unless the communication session with the mobile device ends and a new communication session is established with the mobile device. In another embodiment, the copy can be updated at some time interval, such as 30 times per second, every second, every few seconds, every minute, etc. In one embodiment, the EGM can be configured to select a time interval that is compatible with the amount of bandwidth between the EGM and the mobile device and an amount of data needed to generate the copy on the EGM. Some methods use more or less bandwidth, further, the bandwidth between the EGM and the mobile device can vary over time. Thus, the EGM can be configured to vary the rate of update during a communication session depending on the method used to generate the copy and the current transmission speed between the EGM and the mobile device. Thus, depending on the current update rate, the copy of the mobile device screen display output to the EGM can lag by some amount the image that is currently output to the mobile device display.

In one embodiment, the update interval can be decreased during certain transactions between the mobile device and the EGM. For instance, when an application executing on the mobile device is used to transfer funds to the EGM, the update rate can be increased to reduce lag time between the mobile device screen display and the copy of the mobile device screen display output to the EGM. At other times, to reduce bandwidth requirements, the update rate can be decreased which can result in a greater lag time.

In 420, during a single communication session with a mobile device, the EGM can receive new mobile device screen content and output a new copy of the mobile device screen display. In 422, the communications with the mobile device can be ended. In one embodiment, the EGM can be configured to store one or more copies of the mobile device screen display output to the EGM, such as the copy first output when communications are established. In 424, the EGM display can be updated to reflect the end of communications with the mobile device. For instance, the after the communication session ends. The last copy of the mobile device screen display output to the EGM can be removed from the EGM display.

As described above, a remote server can act as a communication intermediary between an EGM and a mobile device. In addition, the server can be configured to perform operations that allow a copy of the mobile device screen display to be output on an EGM display. Fig. 5B is a method 500 in a server involving the display of a copy of a mobile device screen display on an EGM. In 502, the server can establish communications with a mobile device. The server can be located on a casino area network which is internal to the casino. The casino area network can be isolated from external networks such as the Internet. In 504, the server can determine an EGM is associated with the mobile device and establish communications that allows information transmitted between the mobile device and the EGM. For instance, the server can receive a request from the EGM to establish communications with the mobile device in response to detecting a presence of the mobile device.

In 506, the server can optionally determine and request resources on the EGM, such as an amount of computational resources, memory and a portion of a display screen. The request can be part of a service window provided by the EGM (see Fig. 6 for more details). The resources can be used to output a copy of the mobile device screen display on an EGM display under control of the server. In 508, the server can instantiate a player tracking session on the EGM based upon information received from the mobile device. The server may send player tracking information to the mobile device which can be output to the mobile device, such as available player tracking points.

In 510, the server can receive mobile device screen content, such as all or a portion of the contents of a mobile device's frame buffer. Alternatively, the server can receive instructions from the mobile device for generating a copy of the mobile device screen display and based upon the instructions generate a copy of the mobile device screen display. The server can store approved content that is used to generate the copy of the mobile device screen display. In one embodiment, the server can exchange information with the mobile device that allows it determine that the mobile device is currently executing an approved application which is outputting approved content to the mobile device display.

In 512, the server can be configured to check the mobile screen content for objectionable material. If objectionable material is detected, the copy of the mobile device screen display may not be output to the EGM display. In 514, the server can send the copy to the EGM for output on an EGM display or can send instructions for generating the copy to the EGM which can then generate the copy.

In particular embodiments, input received at the EGM can be used to change a state of the mobile device. For instance, the mobile device can be instantiated as a VNC server. As a VNC server, the graphical interface of the mobile device can be controlled via a remote VNC client, such as via a VNC client instantiated on the EGM. In 516, the server can receive input data from the EGM associated with the copy of the mobile device screen display. The input data can be used to change a state of the mobile device such as to launch an application. In 518, the input data can be sent to the mobile device.

In 520, the server can determine the mobile device is no longer to be associated with the EGM. For instance, the server can make this determination based upon a request from the EGM to terminate the communication session between the mobile device and the EGM or the server can determine that the mobile device is no longer in the vicinity of the EGM via some mechanism. In 522, the server can terminate communication link between the EGM and the mobile device. In 524, the server can store a record of the communication that it enabled between the mobile device and EGM. Subsequently, the method can return to step 504 while communications are still being maintained with the mobile device. Then, the server can establish communications between the mobile device and a second EGM.

### Gaming System and EGMs

Next additional details of EGMs and gaming systems are described with respect to Figs. 6 and 7. Communications between a mobile device and an EGM can be enabled by one or more the devices described with respect to Figs. 6 and 7. In particular, as described above, the communications can be used to display on the EGM a copy of a mobile device screen display. In addition, the gaming system can be configured to allow remote control of a mobile device via inputs received at the EGM. For instance, an application on the mobile device can be launched or affected by inputs received at the EGM and sent to the mobile device.

Fig. 6 shows a block diagram of a gaming system 600 in accordance with the described embodiments. The gaming system 600 can include one or more servers, such as server 602, and a variety of gaming devices including but not limited to table gaming devices, such as 652, mobile gaming devices, such as 654, and slot-type gaming devices, such as 656. The table gaming devices, such as 652, can include apparatus associated with table games where a live operator or a virtual operator is employed. The gaming devices and one or more servers can communicate with one another via a network 601. The network can include wired, wireless or a combination of wired and wireless communication connections and associated communication routers.

Some gaming devices, such as 652, 654 and 656, can be configured with a player interface that allows at least 1) selections, such as a wager amount, associated with a wager-based game to be made and 2) an outcome of the wager-based game to be displayed. As an example, gaming devices, 652, 654 and 656, include player interfaces, 652a, 654a and 656a, respectively. Typically, gaming devices with a player interface are located in publically accessible areas, such as a casino floor. On the other hand, some gaming devices, such as server 602, can be located in publically inaccessible areas, such is in a back-room of a casino or even off-site from the casino. Gaming devices located in publically inaccessible areas may not include a player interface. For instance, server 602 does not include a player interface. However, server 602 includes an administrator interface 635 that allows functions associated with the server 602 to be adjusted.

An example configuration of a gaming device is described with respect to gaming device 604. The gaming device 604 can include 1) a game controller 606 for controlling a wager-based game played on the gaming device and 2) a player interface 608 for receiving inputs associated with the wager-based game and for displaying an outcome to the wager-based game. In more detail, the game controller 606 can include a) one or more processors, such as 626, b) memory for holding software executed by the one or more processors, such as 628, c) a power-hit tolerant memory, such as 630, d) one or more trusted memories, such as 632, e) a random number generator and f) a plurality of software applications, 610. The other gaming devices, including table gaming device 652, mobile gaming device 654, slot-type gaming device 656 and server 602, can each include a game controller with all or a portion of the components described with respect to game controller 606.

In particular embodiments, the gaming device can utilize a "state" machine architecture. In a "state" machine architecture critical information in each state is identified and queued for storage to a persistent memory. The architecture doesn't advance to the next state from a current state until all the critical information that is queued for storage for the current state is stored to the persistent memory. Thus, if an error condition occurs between two states, such as a power failure, the gaming device implementing the state machine can likely be restored to its last state prior to the occurrence of the error condition using the critical information associated with its last state stored in the persistent memory. This feature is often called a "roll back" of the gaming device. Examples of critical information can include but are not limited to an outcome determined for a wager-based game, a wager amount made on the wager-based game, an award amount associated with the outcome, credits available on the gaming device and a deposit of credits to the gaming device.

The power-hit tolerant memory 630 can be used as a persistent memory for critical data, such as critical data associated with maintaining a "state" machine on the gaming device. One characteristic of a power-hit tolerant memory 630 is a fast data transfer time. Thus, in the event of a power-failure, which might be indicated by a sudden power fluctuation, the critical data can be quickly loaded from volatile memory, such as RAM associated with the processor 626, into the power-hit tolerant memory 630 and saved.

In one embodiment, the gaming device 605 can be configured to detect power fluctuations and in response, trigger a transfer of critical data from RAM to the power-hit tolerant memory 630. One example of a power-hit tolerant memory 630 is a battery-backed RAM. The battery supplies power to the normally volatile RAM so that in the event of a power failure data is not lost. Thus, a battery-backed RAM is also often referred to as a non-volatile RAM or NV-RAM. An advantage of a battery-backed RAM is that the fast data transfer times associated with a volatile RAM can be obtained.

The trusted memory 632 is typically a read-only memory of some type that may be designed to be unalterable. An EPROM or EEPROM are two types of memory that can be used as a trusted memory 632. The gaming device 604 can include one or more trusted memories. Other types of memories, such as Flash memory, can also be utilized as an unalterable memory and the example of an EPROM or EEPROM is provided for purposes of illustration only.

Prior to installation the contents of a trusted memory, such as 632, can be verified. For instance, a unique identifier, such as a hash value, can be generated on the contents of the memory and then compared to an accepted hash value for the contents of the memory. The memory may not be installed if the generated and accepted hash values do not match. After installation, the gaming device can be configured to check the contents of the trusted memory. For instance, a unique identifier, such as a hash value, can be generated on contents of the trusted memory and compared to an expected value for the unique identifier. If the generated value of the unique identifier and the expected value of the unique identifier don't match, then an error condition can be generated on the gaming device 604. In one embodiment, the error condition can result in the gaming device entering a tilt state where game play is temporarily disabled on the gaming device.

Sometimes verification of software executed on the gaming device 604 can be performed by a regulatory body, such as a government agency. Often software used by a game controller, such as 606, can be highly regulated, where only software approved by a regulatory body is allowed to be executed by the game controller 606. In one embodiment, the trusted memory 632 can store authentication programs and/or authentication data for authenticating the contents of various memories on the gaming device 604. For instance, the trusted memory 632 can store an authentication program that can be used to verify the contents of a mass storage device, such as 620, which can include software executed by the game controller 606.

The random number generator (RNG) 634 can be used to generate random numbers that can be used to determine outcomes for a game of chance played on the gaming device. For instance, for a mechanical or video slot reel type of game, the RNG, in conjunction with a paytable that lists the possible outcomes for a game of chance and the associated awards for each outcome, can be used to generate random numbers for determining reel positions that display the randomly determined outcomes to the wager-based game. In other example, the RNG might be used to randomly select cards for a card game. Typically, as described above, the outcomes generated on a gaming device, such as 604, are considered critical data. Thus, generated outcomes can be stored to the power-hit tolerant memory 630.

Not all gaming devices may be configured to generate their own game outcomes and thus, may not use an RNG for this purpose. In some embodiments, game outcomes can be generated on a remote device, such as server 602, and then transmitted to the gaming device 604 where the outcome and an associated award can be displayed to the player via the player interface 608. For instance, outcomes to a slot-type game or a card game can be generated on server 602 and transmitted to the gaming device 604.

In other embodiments, the gaming device 604 can be used to play central determination games, such as bingo and lottery games. In a central determination game, a pool of game outcomes can be generated and then, particular game outcomes can be selected as needed (e.g., in response to a player requesting to play the central determination game) from the pool of previously generated outcomes. For instance, a pool of game outcomes for a central determination game can be generated and stored on server 602. Next, in response to a request to play the central determination game on gaming device 604, one of the outcomes from the pool can be downloaded to the gaming device 604. A game presentation including the downloaded outcome can be displayed on the gaming device 604.

In other embodiments, thin client type gaming devices, such as mobile gaming devices used to play wager-based video card or video slot games, may be configured to receive at least game outcomes from a remote device and not use an RNG to generate game outcomes locally. The game outcomes can be generated remotely in response to inputs made on the mobile device, such as an input indicating a wager amount and/or an input to initiate the game. This information can be sent from the mobile device to a remote device, such as from mobile gaming device 654 to server 602. After receiving the game outcome from the remote device, a game presentation for the game outcomes generated remotely can be generated and displayed on the mobile device. In some instances, the game presentation can also be generated remotely and then streamed for display to the mobile device.

The game controller 606 can be configured to utilize and execute many different types of software applications 610. Typically, the software applications utilized by the game controller 606 can be highly regulated and may undergo a lengthy approval process before a regulatory body allows the software applications to be utilized on a gaming device deployed in the field, such as in a casino. One type of software application the game controller can utilize is an Operating System (OS). The OS can allow various programs to be loaded for execution by the processor 626, such as programs for implementing a state machine on the gaming device 606. Further, the OS can be used to monitor resource utilization on the gaming device 606. For instance, certain applications, such as applications associated with game outcome generation and game presentation that are executed by the OS can be given higher priority to resources, such as the processor 626 and memory 628, than other applications that can be executing simultaneously on the gaming device.

As previously described, the gaming device 604 can execute software for determining the outcome of a wager-based game and generating a presentation of the determined game outcome including displaying an award for the game. As part of the game outcome presentation one or more of 1) electro-mechanical devices, such as reels or wheels, can be actuated, 2) video content can be output to video displays, 3) sounds can be output to audio devices, 4) haptic responses can be actuated on haptic devices or 5) combinations thereof, can be generated under control of the game controller 606. The peripheral devices used to generate components of the game outcome presentation can be associated with the player interface 608 where the types of devices that are utilized for the player interface 608 can vary from device to device.

To play a game, various inputs can be required. For instance, via input devices coupled to the gaming device 604, a wager amount can be specified, a game can be initiated or a selection of a game choice associated with the play of the game can be made. The software 610 executed by the game controller 606 can be configured to interpret various signals from the input devices, such as signals received from a touch screen controller or input buttons, and affect the game played on the gaming device in accordance with the received input signals. The input devices can also be part of the player interface 608 provided with the gaming device, such as 604.

In other embodiments, the gaming software 610 executed by the game controller 606 can include applications that allow a game history including the results of a number of past games to be stored, such as the previous 10 or 100 games played on the gaming device 604. The game history can be stored to a persistent memory including but not limited to the power-hit tolerant memory 630. The gaming controller 606 can configured to provide a menu (typically, only operator accessible), that allows the results of a past game to be displayed via the player interface 608. The output from the history menu can include a re-creation of the game presentation associated with a past game outcome, such as a video representation of card hand associated with a video poker game, a video representation of a reel configuration associated with a video slot game, and/or raw data associated with the past game result, such as an award amount, an amount wagered, etc. The history menu can be used for dispute resolution purposes, such as if a player complains that they have not been properly awarded for a game previously played on the gaming device 604.

The reporting software can be used by the game controller 606 to report events that have occurred on the gaming device 604 to remote device, such as server 602. For instance, in one embodiment, the game controller 606 can be configured to report error conditions that have been detected on the gaming device 604, such as if a device has malfunctioned or needs attention. For instance, the reporting software can be used to send a message from the gaming device 604 to the server 602 indicating that a printer on the gaming device needs a refill of tickets. In another embodiment, the gaming controller 606 can be configured to report security events that may have occurred on the gaming device 604, such as but not limited to if a door is opened, a latch is activated or an interior portion of the gaming device 604 has been accessed.

In yet other embodiments, the game controller 606 can be configured to report gaming activity and associated events that has been generated on the gaming device, such as a deposit of cash or an indicia of credit, at the gaming device, a generation of game outcome including an associated award amount and a dispensation of cash or an indicia of credit from the gaming device 604. As part of a loyalty program, the gaming activity can be associated with a particular player. The reporting software can include player tracking elements that allow the gaming activity of a particular player to be reported to a remote device, such as server 602.

The game controller 606 can execute the authentication software to verify the authenticity of data and/or software programs executed on the gaming device 604. For instance, the authentication software can be used to verify the authenticity of data and/or software applications when they are first downloaded to the gaming device 604. Further, the authentication software can be used to periodically verify the authenticity of data and/or software applications currently residing on the gaming device, such as software applications stored on one of the memories coupled to the gaming device 604 including applications loaded into the memory 628 for execution by the processor 626.

The communication software executed by the game controller 606 can be used to communicate with a variety of devices remote to the gaming device 604. For instance, the communication software can be used to communicate with one or more of a) servers remote to the device, such as 602, b) other gaming devices, such as table gaming device 652, mobile gaming device 654 and slot-type gaming device 656 and c) mobile devices carried by casino personnel or players in the vicinity of the gaming device 604. Via the communication software, the game controller can be configured to communicate via many different communication protocols. For instance, different wireless and/or wired communication protocols can be implemented. Further, proprietary or non-proprietary gaming specific protocols can be implemented. For instance, gaming specific non-proprietary communication protocols, such as G2S (game to system), GDS (gaming device standard) and S2S (system to system) communication protocols provided by the Gaming Standards Association (GSA), Fremont, CA, can be implemented on the gaming devices described herein.

The gaming device 604 can communicate with one or more remote devices via one or more network interfaces, such as 612. For instance, via network interfaces 612 and the network 601, the gaming device 604 can communicate with other gaming devices, such as server 602 and/or gaming devices, 652, 654 and 656. The network interfaces can provide wired or wireless communications pathways for the gaming device 604. Some gaming devices may not include a network interface or can be configured to operate in a stand-alone mode where the network interface is not connected to a network.

In other embodiments, a mobile device interface or interfaces, such as 614, can be provided for communicating with a mobile device, such as a cell phone or a tablet computer carried by players or casino personnel temporarily in the vicinity of the gaming device 604. A wireless communication protocol, such as Bluetooth™ and a Wi-Fi compatible standard, can be used for communicating with the mobile devices via the mobile device interfaces 614. In one embodiment, the mobile device interface can implement a short range communication protocol, such as a near-field communication (NFC) protocol used for mobile wallet applications. NFC is typically used for communication distances of 4 cm or less. In addition, a wired communication interface, such as a docking station, can be integrated into the gaming device, such as 604. The wired communication interface can be configured to provide communications between the gaming device 604 and the mobile device and/or providing power to the mobile device.

Near field communication, or NFC, allows for simplified transactions, data exchange, and connections with a touch. Formed in 2004, the Near Field Communication Forum (NFC Forum) promotes sharing, pairing, and transactions between NFC devices and develops and certifies device compliance with NFC standards. NFC's short range helps keep encrypted identity documents private. Thus, a smartphone or tablet with an NFC chip can make a credit card /debit card payment to a gaming device or serve as keycard or ID card for a loyalty program. Further, an NFC device can act a hotel room key. The user of an NFC device as a hotel room keys and/or a player tracking card instrument may allow fast VIP check-in and reduce staffing requirements.

NFC devices can read NFC tags on a gaming device 604 to get more information about the gaming device including an audio or video presentation. For instance, a tap of an NFC enabled device to a gaming device can be used to instantly share a contact, photo, song, application, video, or website link. In another example, an NFC enabled device can be used to transfer funds to the gaming device or enter the player in a multi-player tournament. As another example, an NFC enabled device can be used to receive information from a gaming device that can be used in a persistent gaming application or a social media application.

Further, NFC enabled signage can include NFC tags that allow a patron to learn more information about the content advertised in the signage. The NFC enabled signage can be part of a gaming system. For instance, a sign advertising a show available at the casino can be configured to transfer information about the show, show times and ticketing information via an NFC tag. As another example, a sign showing jackpot information, such as progressive jackpot information, can be used to transfer information about the jackpot, such as the last time the jackpot was won and where it was won.

In one embodiment, an NFC interface on a gaming device can be used to set-up a higher speed communication between the gaming device and another NFC enabled device such as smart phone. The higher speed communication rates can be used for expanded content sharing. For instance, a NFC and Bluetooth enabled gaming device can be tapped by an NFC and Bluetooth enabled smart phone for instant Bluetooth pairing between the devices. Instant Bluetooth pairing between a gaming device and an NFC enabled device, such as a smartphone, can save searching, waiting, and entering codes. In another example, a gaming device can be configured as an NFC enabled router, such as a router supporting a Wi-Fi communication standard. Tapping an NFC enabled device to an NFC enabled and Wi-Fi enabled gaming device can be used to establish a Wi-Fi connection between the two devices.

For instance, Bluetooth™ pairing occurs when two Bluetooth devices agree to communicate with each other and establish a connection. In order to pair two Bluetooth wireless devices, a password (passkey) is exchanged between the two devices. The Passkey is a code shared by both Bluetooth devices, which proves that both users have agreed to pair with each other. After the passkey code is exchanged, an encrypted communication can be set up between the pair devices. In Wi-Fi paring, every pairing can be set up with WPA2 encryption or another type of encryption scheme to keep the transfer private. Wi-Fi Direct is an example of a protocol that can be used to establish point-to-point communications between two Wi-Fi devices. The protocol allows for a Wi-Fi device pair directly with another without having to first join a local network. The method makes it possible to share media from a phone, play multiplayer games or otherwise communicate directly, even when no router exists. Via pairing between a gaming device 604 and a mobile device 654, a mobile device 654 may be able to utilize some of the functionality of secondary devices residing on the gaming device 604. For instance, when a mobile device 654 is paired to a gaming device 604, it may be possible for a player to print something from their mobile device 654 using a printer on the gaming device 604.

The gaming device 604 can include one or more each of value input devices 616 and value output device 618. The value input devices 616 can be used to deposit cash or indicia of credit onto the gaming device. The cash or indicia of credit can be used to make wagers on games played on the gaming device 604. Examples of value input devices 616 include but are not limited to a magnetic-striped card or smart card reader, a bill and/or ticket acceptor, a network interface for downloading credits from a remote source, a wireless communication interface for reading credit data from nearby devices and a coin acceptor. A few examples of value input devices are shown in Fig. 7.

The value output devices can be used to dispense cash or indicia of credit from the gaming device 604. Typically, the indicia of credit can be exchanged for cash. For instance, the indicia of credit can be exchanged at a cashier station or at a redemption station. Examples of value output devices can include a network interface for transferring credits into a remote account, a wireless communication interface that can be used with a mobile device implementing mobile wallet application, a coin hopper for dispensing coins or tokens, a bill dispenser, a card writer, a printer for printing tickets or cards redeemable for cash or credits. Another type of value output device is a merchandise dispenser, which can be configured to dispense merchandise with a tangible value from a gaming device. A few examples of value output devices are shown in Fig. 7.

The combination of value input devices 616 and value output devices 618 can vary from device to device. In some embodiments, a gaming device 604 may not include a value input device or a value output device. For instance, a thin-client gaming device used in a mobile gaming application may not include a value input device and a value output device. Instead, a remote account can be used to maintain the credits won or lost from playing wager-based games via the mobile device. The mobile device can be used to access the account and affect the account balance via game play initiated on the mobile device. Credits can be deposited or withdrawn from the remote account via some mechanism other than via the mobile device interface.

In yet other embodiments, the gaming device 604 can include one or more secondary controllers 619. The secondary controllers can be associated with various peripheral devices coupled to the gaming device, such as the value input devices and value output devices described in the preceding paragraphs. As another example, the secondary controllers can be associated with peripheral devices associated with the player interface 608, such as input devices, video displays, electro-mechanical displays and a player tracking unit. In some embodiments, the secondary controllers can receives instructions and/or data from and provide responses to the game controller 606. The secondary controller can be configured to interpret the instructions and/or data from the game controller 606 and control a particular device according to the received instructions and/or data. For instance, a print controller may receive a print command with a number of parameters, such as a credit amount and in response print a ticket redeemable for the credit amount. In another example, a touch screen controller can detect touch inputs and send information to the game controller 606 characterizing the touch input.

In a particular embodiment, a secondary controller can be used to control a number of peripheral devices independently of the game controller 606. For instance, a player tracking unit can include one or more of a video display, a touch screen, card reader, network interface or input buttons. A player tracking controller can control these devices to provide player tracking services and bonusing on the gaming device 604. In alternate embodiments, the game controller 604 can control these devices to perform player tracking functions. An advantage of performing player tracking functions via a secondary controller, such as a player tracking controller, is that since the player tracking functions don't involve controlling the wager-based game, the software on the player tracking unit can be developed modified via a less lengthy and regulatory intensive process than is required for software executed by the game controller 606, which does control the wager-based game. In general, using a secondary controller, certain functions of the gaming device 604 that are not subject to as much regulatory scrutiny as the game play functions can be decoupled from the game controller 606 and implemented on the secondary controller instead. An advantage of this approach, like for the player tracking controller, is that software approval process for the software executed by the secondary controller can be less intensive than the process needed to get software approved for the game controller.

A mass storage unit(s) 620, such as a device including a hard drive, optical disk drive, flash memory or some other memory storage technology can be used to store applications and data used and/or generated by the gaming device 604. For instance, a mass storage unit, such as 620, can be used to store gaming applications executed by the game controller 606 where the gaming device 604 can be configured to receive downloads of game applications from remote devices, such as server 602. In one embodiment, the game controller 606 can include its own dedicated mass storage unit. In another embodiment, critical data, such as game history data stored in the power-hit tolerant memory 630 can be moved from the power-hit tolerant memory 630 to the mass storage unit 620 at periodic intervals for archival purposes and to free up space in the power-hit tolerant memory 630.

The gaming device 604 can include security circuitry 622, such as security sensors and circuitry for monitoring the sensors. The security circuitry 622 can be configured to operate while the gaming device is receiving direct power and operational to provide game play as well as when the gaming device is uncoupled from direct power, such as during shipping or in the event of a power failure. The gaming device 604 can be equipped with one or more secure enclosures, which can include locks for limiting access to the enclosures. One or more sensors can be located within the secure enclosures or coupled to the locks. The sensors can be configured to generate signals that can be used to determine whether secure enclosures have been accessed, locks have been actuated or the gaming device 604, such as a mobile device has been moved to an unauthorized area. The security monitoring circuitry can be configured to generate, store and/or transmit error events when the security events, such as accessing the interior of the gaming device, have occurred. The error events may cause the game controller 606 to place itself in a "safe" mode where no game play is allowed until the error event is cleared.

The server 602 can be configured to provide one or more functions to gaming devices or other servers in a gaming system 600. The server 602 is shown performing a number of different functions. However, in various embodiments, the functions can be divided among multiple servers where each server can communicate with a different combination of gaming devices. For instance, player interface support 636 and gaming device software 638 can be provided on a first server, progressives can be provided on a second server, loyalty program functions 640 and accounting 648 can be provided on a third server, linked gaming 644 can be provided on a fourth server, cashless functions 646 can be provided on a fifth server and security functions 650 can be provided on a sixth server. In this example, each server can communicate with a different combination of gaming devices because each of the functions provided by the servers may not be provided to every gaming device in the gaming system 600. For instance, the server 602 can be configured to provide progressive gaming functions to gaming devices 604, 652 and 656 but not gaming device 654. Thus, the server 602 may not communicate with the mobile gaming device 654 if progressive functions are not enabled on the mobile gaming device at a particular time.

Typically, each server can include an administrator interface that allows the functions of a server, such as 602, to be configured and maintained. Each server 602 can include a processor and memory. In some embodiments, the servers, such as 602, can include a game controller with components, such as but not limited to a power-hit tolerant memory 630, a trusted memory 632 and an RNG 634 described with respect to gaming device 604. The servers can include one or more network interfaces on which wired or wireless communication protocols can be implemented. Next, some possible functions provided by the server 602 are described. These functions are described for the purposes of illustration only and are not meant to be limiting.

The player interface support 636 can be used to serve content to gaming devices, such as 604, 652, 654 and 656, remote to the server. The content can include video and audio content that can be output on one of the player interfaces, such as 608, 652a, 654a and 656a. Further, the content can be configured to utilize unique features of a particular player interface, such as video displays, wheels or reels, if the particular player interface is so equipped.

In one embodiment, via the player interface support, content can be output to all or a portion of a primary video display that is used to output wager-based game outcomes on a player interface associated with a gaming device. For instance, a portion of the primary display can be allocated to providing a "service window" on the primary video display where the content in the service window is provided from a server remote to the gaming device. In particular embodiments, the content delivered from the server to a gaming device as part of the player interface support 636 can be affected by inputs made on the gaming device. For instance, the service window can be generated on a touch screen display where inputs received via the service window can be sent back to server 602. In response, to the received inputs, the server 602 can adjust the content that is displayed on the remote gaming device that generated the inputs.

The "service window" application can be generated by software code that is executed independently of other game controller software in a secure "sandbox." Via the sandbox, an executable can be given limited access to various resources on an EGM, such as a portion of the CPU resources and memory available on a game controller. The memory can be isolated from the memory used by other processes, such as game processes executed by the game controller.

As described above, a service window application can be allowed to control, send and/or receive data from secondary devices on a gaming device, such as a video display, a touch screen power interfaces or communication interfaces. A service window application allowed to utilize a communication interface, such as a wireless communication interface, can be configured to communicate with a portable electronic device via the communication interface. Thus, a service window application can be configured to implement attract features as described above independently of a game controller on an EGM. Further details of utilizing a service window on a gaming device on an EGM are described in U.S. patent application 12/209,608, by Weber et al., filed September 12, 2008, titled "Gaming Machine with Externally Controlled Content Display," which is incorporated herein by reference in its entirety and for all purposes.

In another embodiment, via the video display, the service window application can be configured to output data in an optical image format, such as a 1-D/2-D bar-code or a QR code. The optically formatted data can be captured by a camera on the portable electronic device. For instance, a receipt indicating the acceptance of a virtual ticket voucher or virtual currency on the gaming device can be displayed in the service window in a QR code format and transferred to a user's portable electronic device via an image capture device on their portable electronic device. In another embodiment, virtual ticket voucher information can be transferred to a portable electronic device as optically formatted image data.

If a player's identity is known, then the player interface support 636 can be used to provide custom content to a remote gaming device, such as 604. For instance, a player can provide identification information, such as information indicating their membership in a loyalty program, during their utilization of a gaming device. The custom content can be selected to meet the identified player's interests. In one embodiment, the player's identity and interests can be managed via a loyalty program, such as via a loyalty program account associated with loyalty function 640. The custom content can include notifications, advertising and specific offers that are determined to be likely of interest to a particular player.

The gaming device software function 638 can be used to provide downloads of software for the game controller and/or second controllers associated with peripheral devices on a gaming device. For instance, the gaming device software 638 may allow an operator and/or a player to select a new game for play on a gaming device. In response to the game selection, the gaming device software function 638 can be used to download game software that allows a game controller to generate the selected game. In another example, in response to determining that a new counterfeit bill is being accepted by bill acceptors in the gaming system 600, the gaming device software function 638 can be used to download a new detection algorithm to the bill acceptors that allow the counterfeit bill to be detected.

The progressive gaming function 642 can be used to implement progressive game play on one or more gaming devices. In progressive game play, a portion of wagers associated with the play of a progressive game is allocated to a progressive jackpot. A group of gaming devices can be configured to support play of the progressive game and contribute to the progressive jackpot. In various embodiments, the gaming devices contributing to a progressive jackpot may be a group of gaming devices collocated near one another, such as a bank of gaming machines on a casino floor, a group of gaming devices distributed throughout a single casino, or group of gaming devices distributed throughout multiple casinos (e.g., a wide area progressive). The progressive gaming function 642 can be used to receive the jackpot contributions from each of the gaming devices participating in the progressive game, determine a current jackpot and notify participating gaming devices of the current progressive jackpot amount, which can be displayed on the participating gaming devices if desired.

The loyalty function 640 can be used to implement a loyalty program within a casino enterprise. The loyalty function 640 can be used to receive information regarding activities within a casino enterprise including gaming and non-gaming activities and associate the activities with particular individuals. The particular individuals can be known or may be anonymous. The loyalty function 640 can used to store a record of the activities associated with the particular individuals as well as preferences of the individuals if known. Based upon the information stored with the loyalty function 640 comps (e.g., free or discounted services including game play), promotions and custom contents can be served to the particular individuals.

The linked gaming function 644 can be used to used provide game play activities involving player participating as a group via multiple gaming devices. An example, a group of player might be competing against one another as part of a slot tournament. In another example, a group of players might be working together in attempt to win a bonus that can be shared among the players.

The cashless function 646 can enable the redemption and the dispensation of cashless instruments on a gaming device. For instance, via the cashless function, printed tickets, serving as a cashless instrument, can be used to transfer credits from one gaming device to another gaming device. Further, the printed tickets can be redeemed for cash. The cashless function can be used to generate identifying information that can be stored to a cashless instrument, such as a printed ticket, that allows the instrument to later be authenticated. After authentication, the cashless instrument can be used for additional game play or redeemed for cash.

The accounting function can receive transactional information from various gaming devices within the gaming system 600. The transactional information can relate to value deposited on each gaming device and value dispensed from each gaming device. The transactional information, which can be received in real-time, can be used to assess the performance of each gaming device as well as an overall performance of the gaming system. Further, the transactional information can be used for tax and auditing purposes.

The security function 650 can be used to combat fraud and crime in a casino enterprise. The security function 650 can be configured to receive notification of a security event that has occurred on a gaming device, such as an attempt at illegal access. Further, the security function 650 can receive transactional data that can be used to identify if gaming devices are being utilized in a fraudulent or unauthorized manner. The security function 650 can be configured to receive, store and analyze data from multiple sources including detection apparatus located on a gaming device and detection apparatus, such as cameras, distributed throughout a casino. In response to detecting a security event, the security function 650 can be configured to notify casino personnel of the event. For instance, if a security event is detected at a gaming device, a security department can be notified. Depending on the security event, one or more team members of the security department can be dispatched to the vicinity of the gaming device. Next, a perspective diagram of a slot-type gaming device that can include all or a portion of the components described with respect to gaming device 604 is described.

Fig. 7 shows a perspective drawing of a gaming device 700 in accordance with the described embodiments. The gaming device 700 is example of what can be considered a "thick-client." Typically, a thick-client is configurable to communicate with one or more remote servers but provides game play, such as game outcome determination, independent of the remote servers. In addition, a thick-client can be considered as such because it includes cash handling capabilities, such as peripheral devices for receiving cash, and a secure enclosure within the device for storing the received cash. In contrast, thin-client device, such as a mobile gaming device, may be more dependent on a remote server to provide a component of the game play on the device, such as game outcome determination, and/or may not include peripheral devices for receiving cash and an associated enclosure for storing it.

Many different configurations are possible between thick and thin clients. For instance, a thick-client device, such as 700, deployed in a central determination configuration, may receive game outcomes from a remote server but still provide cash handling capabilities. Further, the peripheral devices can vary from gaming device to gaming device. For instance, the gaming device 700 can be configured with electro-mechanical reels to display a game outcome instead of a video display, such as 710. Thus, the features of gaming device 700 are described for the purposes of illustration only and are not meant to be limiting.

The gaming device 700 can include a main cabinet 702. The main cabinet 702 can provide a secure enclosure that prevents tampering with the device components, such as a game controller (not shown) located within the interior of the main cabinet and cash handing devices including a coin acceptor 720, a ticket printer 726 and a bill acceptor 718. The main cabinet can include an access mechanism, such as door 704, which allows an interior of the gaming device 700 to be accessed. The actuation of the door 704 can be controlled by a locking mechanism, such as lock 716. The lock 716, the door 704 and the interior of the main cabinet 702 can be monitored with security sensors for detecting whether the interior has been accessed. For instance, a light sensor can be provided to detect a change in light-level in response to the door 704 being opened.

The interior of the main cabinet 700 can include additional secure enclosure, which can also be fitted with locking mechanisms. For instance, the game controller, such as game controller 606, shown in Fig. 6, can be secured within a separate locked enclosure. The separate locked enclosure for the game controller may allow maintenance functions to be performed on the gaming device, such as emptying a drop box for coins, emptying a cash box or replacing a device, while preventing tampering with the game controller. Further, in the case of device with a coin acceptor, 720, the separate enclosure can protect the electronics of the game controller from potentially damaging coin dust.

A top box 706 can be mounted to the top of the main cabinet 702. A number of peripheral devices can be coupled to the top box 706. In Fig. 7, a display device 708 and a candle device 714 are mounted to the top box 706. The display device 708 can be used to display information associated with game play on the gaming device 700. For instance, the display device 708 can be used to display a bonus game presentation associated with the play of a wager-based game (One or more bonus games are often features of many wager-based games). In another example, the display device 708 can be used to display information associated with a progressive game, such as one or more progressive jackpot amounts. In yet another example, the display device 708 can be used to display an attract feature that is intended to draw a potential player's attention to the gaming device 700 when it is not in use.

The candle device 714 can include a number of lighting elements. The lighting elements can be lit in different patterns to draw attention to the gaming device. For instance, one lighting pattern may indicate that service is needed at the gaming device 700 while another light pattern may indicate that a player has requested a drink. The candle device 714 is typically placed at the top of gaming device 700 to increase its visibility. Other peripheral devices, including custom bonus devices, such as reels or wheels, can be included in a top box 706 and the example in Fig. 7 is provided for illustrative purposes only. For instance, some of the devices coupled to the main cabinet 702, such as printer 726, can be located in a different top box configuration.

The gaming device 700 provides a player interface that allows the play of a game, such as wager-based game. In this embodiment, the player interface includes 1) a primary video display 710 for outputting video images associated with the game play, 2) audio devices, such as 722, for outputting audio content associated with game play and possibly casino operations, 3) an input panel 712 for at least providing game play related inputs and 4) a secondary video display 708 for outputting video content related to the game play (e.g., bonus material) and/or the casino enterprise (e.g., advertising). In particular embodiments, one or both of the video displays, 708 and 710, can be equipped with a touch screen sensor and associated touch screen controller, for detecting touch inputs, such as touch inputs associated with the play of a game or a service window output to the display device.

The input panel 712 can include a number of electro-mechanical input buttons, such as 730, and/or touch sensitive surfaces. For instance, the input panel can include a touch screen equipped video display to provide a touch sensitive surface. In some embodiments, the functions of the electro-mechanical input buttons can be dynamically reconfigurable. For instance, the function of the electro-mechanical input buttons may be changed depending on the game that is being played on the gaming device. To indicate function changes, the input buttons can each include a configurable display, such as an e-ink or a video display for indicating the function of button. The output of the configurable display can be adjusted to account for a change in the function of the button.

The gaming device 700 includes a card reader 728, a printer 726, a coin acceptor 720, a bill and/or ticket acceptor 720 and a coin hopper (not shown) for dispensing coins to a coin tray 732. These devices can provide value input/output capabilities on the gaming device 700. For instance, the printer 726 can be used to print out tickets redeemable for cash or additional game play. The tickets generated by printer 726 as well as printers on other gaming devices can be inserted into bill and ticket acceptor 718 to possibly add credits to the gaming device 700. After the ticket is authenticated, credits associated with the ticket can be transferred to the gaming device 700.

The device 718 can also be used to accept cash bills. After the cash bill is authenticated, it can be converted to credits on the gaming device and used for wager-based game play. The coin acceptor 720 can be configured to accept coins that are legal tender or tokens, such as tokens issued by a casino enterprise. A coin hopper (not shown) can be used to dispense coins that are legal tender or tokens into the coin tray 732.

The various aspects, embodiments, implementations or features of the described embodiments can be used separately or in any combination. Various aspects of the described embodiments can be implemented by software, hardware or a combination of hardware and software. The computer readable medium is any data storage device that can store data which can thereafter be read by a computer system. Examples of the computer readable medium include read-only memory, random-access memory, CD-ROMs, DVDs, magnetic tape and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the invention. However, it will be apparent to one skilled in the art that the specific details are not required in order to practice the invention. Thus, the foregoing descriptions of specific embodiments of the present invention are presented for purposes of illustration and description. They are not intended to be exhaustive or to limit the invention to the precise forms disclosed. It will be apparent to one of ordinary skill in the art that many modifications and variations are possible in view of the above teachings.

The embodiments were chosen and described in order to best explain the principles of the invention and its practical applications, to thereby enable others skilled in the art to best utilize the invention and various embodiments with various modifications as are suited to the particular use contemplated. It is intended that the scope of the invention be defined by the following claims and their equivalents.

While the embodiments have been described in terms of several particular embodiments, there are alterations, permutations, and equivalents, which fall within the scope of these general concepts. It should also be noted that there are many alternative ways of implementing the methods and apparatuses of the present embodiments. It is therefore intended that the following appended claims be interpreted as including all such alterations, permutations, and equivalents as fall within the true spirit and scope of the described embodiments.

## Claims

1. A method in an wager-based electronic gaming machine (EGM) including a processor and a memory, the method comprising:
establishing communications with a mobile device;
receiving a copy of a mobile device screen display from the mobile device; and
displaying the copy of the mobile device screen display to a display on the EGM wherein the copy of the mobile device screen display is used to indicate that a mobile device with the mobile device screen display is in an active communication session with the EGM.

2. The method of claim 1, wherein the copy of the mobile device display screen received from the mobile device includes a copy of all or a portion of a frame buffer from the mobile device.

3. The method of claim 2, wherein mobile device is configured as a VNC server to allow or the all or the portion of the frame buffer to be sent to the EGM.

4. The method of claim 1, further comprising: receiving high-level instructions for generating the copy of the mobile device display and based upon the high-level instructions generating the copy of the mobile device screen display to be sent to a frame buffer associated with the display on the EGM.

5. The method of claim 4, wherein the copy of the mobile device screen display is generated using approved content stored on the EGM.

6. The method of claim 1, further comprising: during an unbroken communication session between the mobile device and the EGM, receiving a plurality of copies of the mobile device screen display wherein each copy represents a state of the mobile device screen display at a particular time and replacing on the EGM display a first copy of the mobile device screen display from a first time with a second copy of the mobile device screen display from a second time.

7. The method of claim 6, further comprising: determining a time interval between updates of the EGM display with a new copy of the mobile device screen display.

8. The method of claim 1, further comprising: receiving player tracking information from the mobile device and instantiating a player tracking session based upon the received player tracking information wherein the copy of the mobile device screen display is used to indicate that the player tracking information was received from the mobile device that provided the copy of the mobile device screen display.

9. The method of claim 8, further comprising: terminating display the copy of the mobile device screen display to indicate that the player tracking session based upon the player tracking information received from the mobile device is no longer in force.

10. The method of claim 1, further comprising: receiving information from the mobile device for determining that the mobile device is currently executing an approved application that is outputting content to the mobile device display screen.

11. The method of claim 1, further comprising: receiving input data indicating a selection from the copy of the mobile device screen display, sending data to the mobile device that causes a state of the mobile device, including content output to the mobile device screen display, to change.

12. The method of claim 11, wherein the data sent to the mobile devices causes an application on the mobile device to be launched.

13. The method of claim 11, wherein the data sent to the mobile device is used to indicate a selection of an item within an application executing on the mobile device.

14. The method of claim 11, further comprising receiving a new copy of the mobile device screen display after the state of the mobile device has changed wherein the new copy reflects the state change on the mobile device.

15. The method of claim 1, where the copy of the mobile device screen display is output to the display while the display includes images associated with a presentation for the wager-based game.
